# EUROPEAN PATENT SPECIFICATION

(11) **EP 3 472 988 B1**
(45) Date of publication and mention of the grant of the patent: **19.03.2025**
(21) Application number: 17729645.6
(22) Date of filing: 30.05.2017
(51) Int. Cl.: H04L 67/1008, H04L 49/00, G06F 9/50, H04L 47/70

(54) **PROVIDING DATA PLANE SERVICES FOR APPLICATIONS**
BEREITSTELLUNG VON DIENSTEN AUF DATENEBENE FÜR ANWENDUNGEN
FOURNITURE DE SERVICES DE PLAN DE DONNÉES DESTINÉE À DES APPLICATIONS

(30) Priority: 16.06.2016 US 201615184295
(43) Date of publication of application: 24.04.2019
(73) Proprietor: Nokia of America Corporation, Murray Hill, NJ 07974-0636 (US)
(72) Inventor: CHANG, Hyunseok, Holmdel, NJ 07733-1661 (US); LAKSHMAN, Tirunell, V., Holmdel, NJ 07733-1661 (US); MUKHERJEE, Sarit, Holmdel, NJ 07733-1661 (US); STILIADIS, Dimitrios, San Jose, CA 95120 (US); WANG, Limin, Murray Hill, NJ 07974-0636 (US)
(74) Representative: Zinsinger, Norbert
(86) International application number: PCT/US2017/034927
(87) International publication number: WO 2017/218173

(56) References cited:
- US-A1- 2014 164 619
- US-A1- 2015 082 301
- US-A1- 2015 244 617
- US-A1- 2015 370 586
- US-A1- 2016 094 668

## Description

### TECHNICAL FIELD

The present disclosure relates generally to the field of communication networks and, more particularly but not exclusively, to supporting data plane services for applications.

### BACKGROUND

Many types of communication environments, such as service provider networks and datacenter environments, among others, may support various types of data plane services. For example, such data plane services may include monitoring services (e.g., flow analytics, intrusion detection, or the like), filtering services (e.g., firewalls or the like), load balancing services, transformation services (e.g., network address translation (NAT) or the like), acceleration services (e.g., offloading or the like), or the like. The data plane services may be deployed and operated in various ways.

US2016094668A1 discloses systems and methods for providing data plane services in a data center include receiving a request for a data plane service from a tenant of a host in the data center. In response to receiving the request, a service process is instantiated at the host for performing the data plane service for a virtual machine of the tenant.

US 2014164619 discloses a virtual application is hosted by a first plurality of application virtual machines and a second plurality of firewall virtual machines provides firewalling services for traffic associated with the virtual application. A cloud management entity determines that the virtual application requires an increased number of application virtual machines. A security profile for the virtual application is verified to determine if an increased number of firewall virtual machines is required by the increased number of application virtual machines. The cloud management entity can instantiate additional application virtual machines and firewall virtual machines as required.

### SUMMARY

The invention is set out in the appended Set of claims. The present disclosure generally discloses various data plane services support mechanisms that are configured to provide data plane services for applications.

In at least some embodiments, a non-transitory computer-readable storage medium is provided. The non-transitory computer-readable storage medium stores instruction which, when executed by a computer, cause the computer to perform a method. The method includes initiating instantiation of a first virtual resource on a server, wherein the first virtual resource is associated with a second virtual resource configured to run an application. The method includes initiating configuration of the first virtual resource to provide a data plane service for the application. The method includes initiating configuration of flow connectivity for the data plane service.

In at least some embodiments, an apparatus is provided. The apparatus includes a processor and a memory communicatively connected to the processor. The processor is configured to initiate instantiation of a first virtual resource on a server, wherein the first virtual resource is associated with a second virtual resource configured to run an application. The processor is configured to initiate configuration of the first virtual resource to provide a data plane service for the application. The processor is configured to initiate configuration of flow connectivity for the data plane service.

In at least some embodiments, a method is provided. The method includes initiating instantiation of a first virtual resource on a server, wherein the first virtual resource is associated with a second virtual resource configured to run an application. The method includes initiating configuration of the first virtual resource to provide a data plane service for the application. The method includes initiating configuration of flow connectivity for the data plane service.

In at least some embodiments, a non-transitory computer-readable storage medium is provided. The non-transitory computer-readable storage medium stores instruction which, when executed by a computer, cause the computer to perform a method. The method includes receiving, by a virtual switch, a data structure including a concatenated packet and associated packet metadata. The concatenated packet includes a concatenated packet payload and a concatenated packet header. The concatenated packet payload includes a set of packet payloads of a set of multiple packets. The concatenated packet header includes one or more header fields common to the multiple packets. The packet metadata has a first packet metadata format. The method includes processing the packet data structure, at the virtual switch, to provide a modified data structure including the concatenated packet and associated new packet metadata. The new packet metadata has a second packet metadata format that is different than the first packet metadata format. The method includes propagating, from the virtual switch, the modified data structure.

In at least some embodiments, an apparatus is provided. The apparatus includes a processor and a memory communicatively connected to the processor. The processor is configured to run a virtual switch. The virtual switch is configured to receive a data structure including a concatenated packet and associated packet metadata. The concatenated packet includes a concatenated packet payload and a concatenated packet header. The concatenated packet payload includes a set of packet payloads of a set of multiple packets. The concatenated packet header includes one or more header fields common to the multiple packets. The packet metadata has a first packet metadata format. The virtual switch is configured to process the packet data structure to provide a modified data structure including the concatenated packet and associated new packet metadata. The new packet metadata has a second packet metadata format that is different than the first packet metadata format. The virtual switch is configured to propagate the modified data structure.

In at least some embodiments, a method is provided. The method includes receiving, by a virtual switch, a data structure including a concatenated packet and associated packet metadata. The concatenated packet includes a concatenated packet payload and a concatenated packet header. The concatenated packet payload includes a set of packet payloads of a set of multiple packets. The concatenated packet header includes one or more header fields common to the multiple packets. The packet metadata has a first packet metadata format. The method includes processing the packet data structure, at the virtual switch, to provide a modified data structure including the concatenated packet and associated new packet metadata. The new packet metadata has a second packet metadata format that is different than the first packet metadata format. The method includes propagating, from the virtual switch, the modified data structure.

### BRIEF DESCRIPTION OF THE DRAWINGS

The teachings herein can be readily understood by considering the following detailed description in conjunction with the accompanying drawings, in which:
FIG. 1 depicts an exemplary datacenter communication system configured to support data plane services for applications;
FIG. 2 depicts an exemplary method by which elements of the exemplary datacenter communication system configure and manage virtual resources to support data plane services for applications;
FIG. 3 depicts an exemplary method by which elements of the exemplary datacenter communication system configure and manage data plane services for applications;
FIG. 4 depicts an exemplary method by which an element of the exemplary datacenter communication system provides a data plane service for an application;
FIG. 5 depicts an exemplary method by which elements of the exemplary datacenter communication system communicate application traffic for applications while also utilizing data plane services for the applications;
FIG. 6 depicts an exemplary datacenter communication environment illustrating an exemplary configuration of an Open vSwitch based virtual switch to support NIC offloading;
FIG. 7 depicts an exemplary method for use by a virtual switch to support NIC offloading; and
FIG. 8 depicts a high-level block diagram of a computer suitable for use in performing various functions described herein.

To facilitate understanding, identical reference numerals have been used, where possible, to designate identical elements common to the figures.

### DETAILED DESCRIPTION

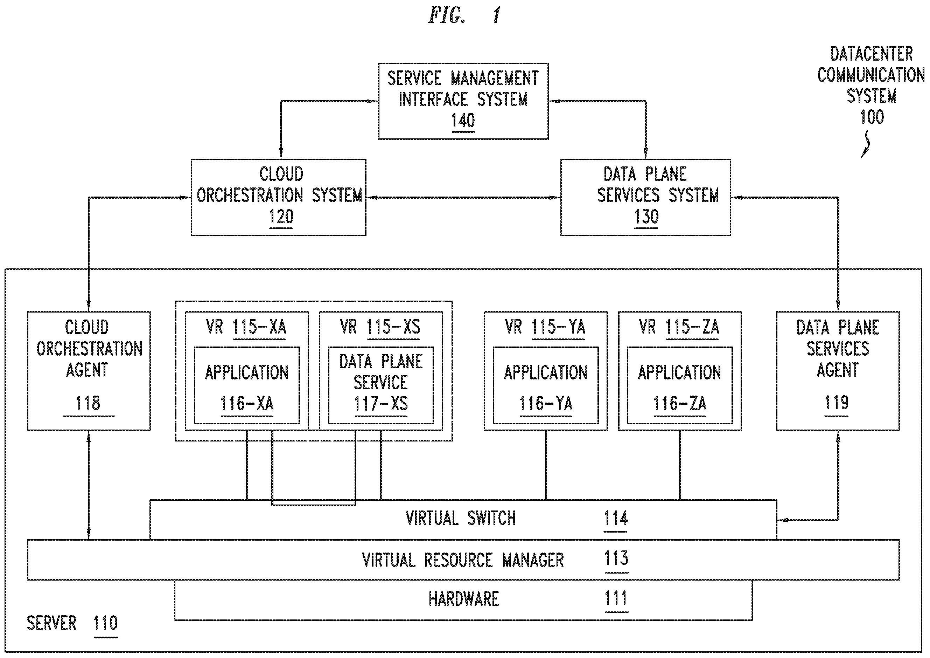

The present disclosure generally discloses a data plane services support mechanism. The data plane services support mechanism may be configured to provide efficient and flexible data plane services. The data plane services support mechanism may be configured to provide efficient and flexible data plane services in datacenters or other types of communication environments. The data plane services support mechanism may be configured to provide a data plane service for an application. The application may be running on one or more virtual resources and, similarly, the data plane service may run on one or more virtual resources. The one or more virtual resources running the data plane service for the application may have a certain level of affinity with the one or more virtual resources running the application for which the data plane service is provided (e.g., located on the same server, located on servers within the same rack, or the like). The data plane services support mechanism may be configured to support improved communication of application traffic associated with providing one or more data plane services for one or more applications. The improved communication of application traffic associated with providing one or more data plane services for one or more applications may be provided using network interface card (NIC) offloading, which may be supported based on configuration of virtual switches to support NIC offloading. These and various other embodiments and potential advantages of the data plane services support mechanism may be further understood by way of reference to the exemplary datacenter communication system of FIG. 1.

FIG. 1 depicts an exemplary datacenter communication system configured to support data plane services for applications.

The datacenter communication system 100 is configured to support a data plane services support mechanism that is configured to provide efficient and flexible data plane services.

The datacenter communication system 100 is configured to support cloud computing for multiple tenants. The tenants may be provided with virtual resources (e.g., virtual machines (VMs), virtual containers (VCs), or the like) running on end servers. The virtual resources provided to the tenants may support various types of applications for the tenants. For example, some types of applications which may be virtualized using virtual resources may include data management applications, data processing applications, web browsing applications, enterprise applications (e.g., human resources (HR) management applications, enterprise resource planning applications, billing applications, payment processing applications, and so forth), or the like. The end servers hosting the virtual resources that are running the applications for the tenants may be networked together to support communications between applications within the datacenter communication system 100 and between applications within datacenter communication system 100 and other elements located outside of datacenter communication system 100 (e.g., end user devices, network devices, or the like). It will be appreciated, for example, that communications of the end servers may be supported using top-of-rack switches, aggregating switches, gateways, and the like (which are omitted from FIG. 1 for purposes of clarity).

The datacenter communication system 100 is configured to support data plane services for the applications of the tenants. The data plane services may include packet processing services which may be provided in the data plane, such as monitoring services (e.g., flow analytics, intrusion detection, or the like), filtering services (e.g., firewalls), load balancing services, transformation services (e.g., network address translation (NAT)), acceleration services (e.g., offloading), or the like. The data plane services may be configured to support stateless or stateful handling of packets of packet flows of the applications that the data plane services are supporting. The data plane services may be configured to support inspection and transformation of packet headers as well as packet payloads of packets of packet flows of the applications that the data plane services are supporting. The data plane services are configured to perform packet processing, where the type of packet processing that is performed for a data plane service may depend on the service type of the data plane service (e.g., packet filtering processing for a packet filtering service, packet inspection processing for a monitoring service, or the like). It will be appreciated that stateless handling of packets typically includes basic processing which is typically based on static information (e.g., source address, destination address, of the like), whereas stateful handling of packets may include more involved processing in which packet flow state may be determined and used (e.g., tracking the current stage of a TCP connection or an application-level session, performing stateful intrusion detection from deep packet inspection (DPI) of payloads, performing stateful load balancing of application traffic, or the like, as well as various combinations thereof). The datacenter communication system 100 may be configured to support pushing of the data plane services for the tenants from a more centralized deployment within datacenter communication system 100 (e.g., deployment on datacenter gateway devices, aggregating switches, or the like) to more distributed deployment within datacenter communication system 100 (e.g., closer to the virtual resources running the applications for the tenants, such as onto the end servers hosting the virtual resources that are running the applications for the tenants).

The datacenter communication system 100 is configured to support dynamic, distributed deployment and management of data plane services for the tenants. The datacenter communication system 100 may be configured to support dynamic, distributed deployment and management of data plane services by using centralized control to deploy and manage application-specific data plane services within virtual resources running on commodity end servers. The datacenter communication system 100 may be configured to support dynamic, distributed deployment and management of data plane services such that application-specific data plane services may be deployed, scaled, removed, and chained with each other in a centralized and policy-driven manner for ease of management. The datacenter communication system 100 may be configured to support dynamic, distributed deployment and management of data plane services for the tenants using a combination of software defined networking (SDN) (e.g., OpenFlow-based SDN) and centralized cloud orchestration. It is noted that the use of SDN provides flexibility in data plane service composition, while the use of centralized cloud orchestration brings scale-out properties to data plane service deployments. In this manner, the datacenter communication system 100 may be configured to provide a scalable, per-tenant data plane service platform for dynamic deployment and management of data plane services in datacenter communication system 100 (which platform also may be referred to herein as the Nimble platform).

The datacenter communication system 100 is configured to support dynamic, distributed deployment and management of data plane services for the tenants. The datacenter communication system 100 may be configured to deploy and manage a data plane service for an application hosted for a tenant within the datacenter communication system 100. The datacenter communication system 100 may be configured to dynamically deploy and manage a data plane service for an application of a tenant. The datacenter communication system 100 may be configured to deploy and manage a data plane service for an application of a tenant such that the data plane service is tied to the application of the tenant. The datacenter communication system 100 may be configured to deploy a data plane service next to or relatively close to an associated application of the tenant (e.g., on the same server, on different servers within the same rack, or the like). The data plane service may be deployed as a set of one or more service instances running on one or more virtual resources (e.g., VMs, VCs, or the like). The one or more service instances for the data plane service may be configured to perform packet processing for providing the data plane service using the one or more virtual resources on which the one or more service instances are deployed (e.g., performing packet processing within a lightweight container (e.g., LXC) or a full-blown VM). The data plane service, after being deployed, may be reconfigured as needed. The data plane service, after being deployed, may be automatically scaled out or scaled in as needed by the addition or removal of service instances, thereby bringing scalability properties to the data plane service deployment. In this manner, tenants may be provided with much richer software-defined, software-driven, data plane services, beyond simple layer-2/3 access control typically offered by software/hardware switches.

The datacenter communication system 100 is configured to support dynamic, distributed deployment and management of data plane services for the tenants. In this manner, the datacenter communication system 100 may be configured to provide an edge-based networking model that is able to support the growing demand for various sophisticated data plane services for tenant applications where such data plane services may be provided at or near the edge. As a result, by providing data plane services at or near the edge of the datacenter communication system 100 (e.g., near the tenant applications for which the data plane services are being provided), the data plane functions for the tenant applications may be extended beyond simple stateless switching and routing functions to include more network I/O and compute-intensive, stateful data plane services which typically use some form of L2-L7 packet processing. Additionally, as a result, hardware-based network elements that are located upstream of the end servers in the datacenter communication system 100 (e.g., top-of-rack switches, aggregation switches, and the like) may not need to support certain more sophisticated data plane services and, thus, may remain relatively simple (e.g., the upstream network elements may simply tunnel tenant application traffic via virtual overlays (e.g., using Virtual Extensible Local Area Networks (VXLANs), Stateless Transport Tunneling (STT), Network Virtualization using Generic Routing Encapsulation (NVGRE), or the like) terminated at the edge). Additionally, another benefit of deploying data plane services in situ with tenant applications at which tenant application traffic is generated or consumed is that packet processing of data plane services may be made more efficient (e.g., various network stack optimizations, such as NIC offload which is discussed further below, that are designed to boost the performance of tenant applications can be used to accelerate co-located data plane applications as well). It will be appreciated that various other benefits or potential benefits may be realized.

These and various other embodiments and potential advantages of the datacenter communication system 100 may be further understood by further considering the elements of the datacenter communication system 100, which are discussed further below.

The datacenter communication system 100 includes a server 110, a cloud orchestration system 120, a data plane services manager 130, and a service management interface system 140.

The server 110 includes hardware 111, a virtual resource manager (VRM) 113, a virtual switch (v-switch) 114, a set of virtual resources (VRs) 115 (illustratively, VRs 115-XA, 115-XS, 115-YA, and 115-ZA), a cloud orchestration agent 118 (which also may be referred to herein as a compute agent 118), and a data plane services agent 119 (which also may be referred to herein as a service agent 119).

The hardware 111 of server 110 may include any physical resources which may be included within a host computer to be virtualized. For example, the hardware 111 may include physical computing resources (e.g., one or more processors or other physical computing resources), physical memory resources (e.g., one or more memories), physical storage resources, physical networking resources (e.g., network interface cards (NICs) or other physical networking resources), or the like, as well as various combinations thereof. The typical configuration of the hardware of a server will be understood by one skilled in the art.

The VRM 113 of server 110 is configured to manage the virtualization of the hardware 111 of server 110, thereby enabling virtualization of the server 110. The VRM 113 may be a type-1 (or native or bare-metal) VRM that runs directly on the hardware 111, may be a type-2 (or hosted) VRM that runs on an operating system (OS) running on the hardware 111, or the like. The VRM 113 is configured to instantiate VRs 115 on server 110, terminate VRs 115 on server 110, or the like, as well as various combinations thereof. It will be appreciated that, in the case in which the VRM 113 instantiates VRs 115 using virtual machines, the VRM 113 also may be referred to herein as a virtual machine manager (VMM), a hypervisor, or using other related terms. It will be appreciated that, in the case in which the VRM 113 is a type-2 VRM and has a container runtime environment (e.g., Docker, LXC, rkt, or the like) installed, the VRM 113 can instantiate VRS 115 based on virtual machines, containers, or combinations thereof

The v-switch 114 of server 110 is configured to support communication of traffic for applications and services running on the VRs 115 of the server 110. The v-switch 114 is a software switch having a programmable data path which can be programmed by a controller using a control plane protocol (e.g., OpenFlow or other suitable type of control plane protocol). The v-switch 114 may be configured to provide a network switching stack for supporting switching of traffic for applications and services running on the VRs 115 of the server 110. The v-switch 114 may be configured to support various communications protocols (e.g., Layer 2 (L2) protocols, Layer 3 (L3) protocols. tunneling protocols, spanning tree protocols, or the like), communications capabilities (e.g., link aggregation (LAG), virtual local area network (VLAN) capabilities, or the like), or the like, as well as various combinations thereof. The v-switch 114 may be configured to run on the VRM 113 that is managing the VRs 115 that are hosting the applications and services for which switching of traffic is supported (and, thus, may be configured to run on the hardware 111 of server 110). For example, the v-switch 114 may be implemented as an Open vSwitch (OVS) or as any other suitable type of virtual switch configured to support communication of application traffic in a virtualization context.

The VRs 115 are virtualized versions of the physical resources of the hardware 111. The virtualization of the physical resources of the hardware 111 to provide the VRs 115, as discussed above, is controlled by VRM 113. For example, the VRs 115 may include virtual computing resources (e.g., one or more virtual processors or other virtual computing resources), virtual memory resources (e.g., one or more virtual memories), virtual storage resources, virtual networking resources (e.g., virtual network interface cards (vNICs) or other virtual networking resources), or the like, as well as various combinations thereof. The VRs 115, as discussed herein, may include VMs, VCs, processes running on the VRM 113, or the like.

The cloud orchestration agent 118 and the data plane services agent 119 are configured to run on server 110 for supporting deployment and management of a data plane service on server 110 for an application hosted on server 110. The cloud orchestration agent 118 is configured to cooperate with the VRM 113 to support instantiation and termination of VRs 115, for data plane services for applications on the server 110, under the control of the cloud orchestration system 120. The data plane services agent 119 is configured to cooperate with the v-switch 114 to provide data plane services for applications on the server (e.g., to support configuration of data plane services for applications on the server 110 and configuration of flow connectivity for the data plane services provided for applications on the server 110) under the control of data plane services manager 130. The cloud orchestration agent 118 and the data plane services agent 119 may be configured to run on server 110 in various ways (e.g., including instructions which, when executed by a computer (e.g., executed using hardware 111 of the server 110), cause the computer to perform the functions of cloud orchestration agent 118 and the data plane services agent 119, respectively). The cloud orchestration agent 118 and the data plane services agent 119 may be configured to run on server 110 in various ways (e.g., running on the VRM 113, running on one or more virtual resources (e.g., where the cloud orchestration agent 118 and the data plane services agent 119 may run on separate virtual resources or may run together on the same virtual resource), or the like, as well as various combinations thereof. It will be appreciated that, although primarily depicted and described with respect to embodiments in which cloud orchestration agent 118 and data plane services agent 119 are separate agents, in at least some embodiments the functions of the cloud orchestration agent 118 and the data plane services agent 119 may be combined into a single agent, functions of the cloud orchestration agent 118 may be distributed across multiple agents, functions of the data plane services agent 119 may be distributed across multiple agents, or the like.

It will be appreciated that the server 110 may include various other components, may be configured in other ways, or the like, as well as various combinations thereof.

The server 110 is configured to support deployment and management of a data plane service on server 110 for an application hosted on server 110. The operation of server 110 in providing such functions is described within the context of an example.

In the example of FIG. 1, a first tenant (denoted as tenant X) has a first application or application instance (denoted as application (APP) 116-XA) that is running on VR 115-XA, a second tenant (denoted as tenant Y) has a second application or application instance (denoted as application (APP) 116-YA) that is running on VR 115-YA, and a third tenant (denoted as tenant Z) has a third application or application instance (denoted as application (APP) 116-ZA) that is running on VR 115-ZA. The APPs 116-XA, 116-YA, and 116-ZA may be referred to collectively as APPs 116. The APPs 116 may include any applications which may be run on VRs 115 (e.g., data management applications, data processing applications, web-browsing applications, enterprise applications (e.g., human resources (HR) management applications, enterprise resource planning applications, billing applications, payment processing applications, and so forth), or the like. It will be appreciated that, although primarily presented with respect to an example in which the three applications of three tenants (illustratively, APPs 116) are hosted on server 110, fewer or more applications of fewer or more tenants may be hosted on server 110.

In the example of FIG. 1, a data plane service has been deployed for the first tenant that has APP 116-XA that is running on VR 115-XA (illustratively, data plane service (DPS) 117-XS).

The DPS 117-XS is a packet processing service which may be provided in the data plane of APP 116-XA for which the DPS 117-XS is provided. The DPS 117-XS may be a monitoring service (e.g., a flow analytics service, intrusion detection service, or the like), a filtering service (e.g., a firewall or other filtering service), a load balancing service (e.g., for load balancing application traffic of APP 116-XA across multiple application instances providing APP 116-XA), a transformation service (e.g., a NAT service, an acceleration service, a protocol offloading service, or the like. The DPS 117-XS may be configured to support stateless or stateful handling of packets of packet flows of APP 116-XA for which the DPS 117-XS is provided. The DPS 117-XS may be configured to support inspection and transformation of packet headers as well as packet payloads of packets of packet flows of APP 116-XA for which the DPS 117-XS is provided. The DPS 117-XS is configured to perform packet processing, where the type of packet processing that is performed by DPS 117-XS may depend on the service type of the DPS 117-XS (e.g., packet filtering processing for a packet filtering service, packet inspection processing for a monitoring service, or the like). The DPS 117-XS may be configured to support various other types of packet processing for packets of APP 116-XA for which the DPS 117-XS is provided.

The DPS 117-XS has been deployed by instantiating the VR 115-XS for the first tenant, configuring the DPS 117-XS on the VR 115-XS (which may include providing the DPS 117-XS on the VR 115-XS and configuring the DPS 117-XS to provide the associated packet processing for providing the DPS 117-XS for the APP 116-XA), and configuring flow connectivity for the DPS 117-XS (which may include configuration of v-switch 114 to support flow connectivity between the v-switch 114 and both of the VR 115-XA that is hosting the APP 116-XA and the VR 115-XS that is hosting the DPS 117-XS for the APP 116-XA). It will be appreciated that, in FIG. 1, the box around the VR 115-XA (running APP 116-XA) and the VR 115-XS (running DPS 117-XS) indicates an association of the DPS 117-XS with the APP 116-XA for the first tenant.

The deployment of the DPS 117-XS, as noted above, includes instantiation of the VR 115-XS for the first tenant such that the VR 115-XS is available to run the DPS 117-XS for the APP 116-XA. The instantiation of the VR 115-XS may be performed by the VRM 113. The instantiation of a virtual resource, such as a VM or VC, on a server by a VRM of the server will be understood by one stilled in the art. The VRM 113 may instantiate the VR 115-XS based on a request from the cloud orchestration agent 118. The request from the cloud orchestration agent 118 may be initiated by the cloud orchestration agent 118 based on a request from cloud orchestration system 120. The request from the cloud orchestration system 120 may be initiated by the cloud orchestration system 120 based on a request from service management system 140 (e.g., where the tenant requests that a particular data plane service be provided for the APP 116-XA running on the server 110 for the first tenant).

The deployment of the DPS 117-XS, as noted above, includes deploying the DPS 117-XS such that it has some level of affinity to the APP 116-XA for which it is being provided. This may be provided by deploying the DPS 117-XS on the same end host as the APP 116-XA (illustrated in FIG. 1 where the DPS 117-XS is deployed on the server 110 on which associated APP 116-XA is hosted), deploying the DPS 117-XS on an end host that is near the end host on which the application 116-XA is hosted (e.g., on a different server within the same rack as server 110, on another server within an adjacent rack, or the like). In at least some embodiments, for native performance and isolation, the DPS 117-XS may be default sandboxed into a lightweight container. In at least some embodiments, such as in cases where the underlying VRM 113 does not support containers in bare-metal settings (e.g., ESXi), or the kernel requirements of the DPS 117-XS have any incompatibility with the VRM 113, alternative VM-based deployment may be used. It will be appreciated that other deployments of DPS 117-XS may be supported.

The deployment of the DPS 117-XS, as noted above, includes configuring the DPS 117-XS on the VR 115-XS. The configuration of the DPS 117-XS on the VR 115-XS may include providing the DPS117-XS on the VR 115-XS and configuring the DPS 117-XS to provide the associated packet processing for providing the DPS 117-XS for the APP 116-XA (e.g., packet filtering processing for a packet filtering service, packet inspection processing for a monitoring service, or the like). The configuration of the DPS 117-XS to provide the associated packet processing for providing the DPS 117-XS for the APP 116-XA may include providing to the VR 115-XS various types of information to be executed by and used by the VR 115-XS to provide the DPS 117-XS for the APP 116-XA (e.g., capabilities, processes, software instructions, rules, policies, or the like, as well as various combinations thereof). The configuration of the DPS 117-XS on the VR 115-XS may be performed by the data plane services agent 119. The data plane services agent 119 may configure the DPS 117-XS on the VR 115-XS based on a request from the data plane services manager 130. The request from the data plane services manager 130 may be initiated by the data plane services manager 130 based on a request from service management system 140 (e.g., where the tenant requests that a particular data plane service be provided for the APP 116-XA running on the server 110 for the first tenant).

The deployment of the DPS 117-XS, as noted above, includes configuring flow connectivity for the DPS 117-XS. The configuration of flow connectivity for the DPS 117-XS may include configuration of v-switch 114 that supports communication of application traffic for the DPS 117-XS running on the VR 115-XS (e.g., to support flow connectivity between v-switch 114 and both VR 115-XA supporting APP 116-XA and VR 115-XS supporting DPS 117-XS). The flow connectivity for the DPS 117-XS, as discussed further below, may be based on the data plane service type of the DPS 117-XS or on the specific DPS 117-XS. The configuration of flow connectivity for the DPS 117-XS may include configuring one or more flow forwarding tables to include one or more flow forwarding rules. The configuration of flow connectivity for the DPS 117-XS may be performed by the data plane services agent 119. The data plane services agent 119 may configure the flow connectivity for the DPS 117-XS based on a request from the data plane services manager 130. The request from the data plane services manager 130 may be initiated by the data plane services manager 130 based on a request from service management system 140 (e.g., where the tenant requests that a particular data plane service be provided for the APP 116-XA running on the server 110 for the first tenant).

The configuration of flow connectivity for the DPS 117-XS by configuring v-switch 114 to support communication of application traffic for the DPS 117-XS may include configuring v-switch 114 to include flow information for routing of application traffic of associated APP 116-XA. For example, configuration of flow connectivity for the DPS 117-XS by configuring v-switch 114 to support communication of application traffic for the DPS 117-XS may include updating a flow rule database of v-switch 114. For example, the configuration of flow connectivity for the DPS 117-XS by configuring v-switch 114 to support communication of application traffic for the DPS 117-XS may include configuring v-switch 114 to direct ingress application traffic intended for APP 116-XA to both the VR 115-XA hosting APP 116-XA and the VR 115-XS hosting DPS 117-XS in parallel. For example, the configuration of flow connectivity for the DPS 117-XS by configuring v-switch 114 to support communication of application traffic for the DPS 117-XS may include configuring v-switch 114 to direct ingress application traffic intended for APP 116-XA to the VR 115-XS hosting DPS 117-XS such that the application traffic may be processed by DPS 117-XS before being provided to APP 116-XA (via v-switch 114). For example, the configuration of flow connectivity for the DPS 117-XS by configuring v-switch 114 to support communication of application traffic for the DPS 117-XS may include configuring v-switch 114 to receive egress application traffic sourced by APP 116-XA and provide the egress application traffic to the VR 115-XS hosting DPS 117-XS (e.g., in parallel with further propagation of the egress application traffic or before further propagation of the egress application traffic). It will be appreciated that configuration of flow connectivity for the DPS 117-XS by configuring the v-switch 114 may include other types of configuration and that the configuration may depend on various factors (e.g., the type of data plane service provided by DPS 117-XS, the application type of APP 116-XA, the type of application traffic to be supported for APP 116-XA, or the like, as well as various combinations thereof).

The flow connectivity for the DPS 117-XS, as noted above may be based on the data plane service type of the DPS 117-XS or on the specific DPS 117-XS. For example, where the DPS 117-XS is an intrusion detection service for monitoring of ingress application traffic for the APP 116-XA, the configuration of flow connectivity for the DPS 117-XS may include configuring the v-switch 114 to provide the ingress application traffic intended for the APP 116-XA to both the VR 115-XA hosting APP 116-XA and to the VR 115-XS hosting DPS 117-XS in parallel so that APP 116-XA can receive the ingress application traffic and so that DPS 117-XS can monitor the ingress application traffic for the APP 116-XA for any potential attacks. For example, where the DPS 117-XS is a firewall service for protecting the APP 116-XA, the configuration of flow connectivity for the DPS 117-XS may include configuring the v-switch 114 to provide the ingress application traffic intended for the APP 116-XA to the VR 115-XS hosting DPS 117-XS, before providing the application traffic to the VR 115-XA hosting APP 116-XA, such that the DPS 117-XS can provide the firewall services for the ingress application traffic before it reaches the APP 116-XA and (2) configuring the v-switch 114 to provide the ingress application traffic that is received from DPS 117-XS (e.g., ingress application traffic that passes the firewall check performed by the firewall service on the DPS 117-XS) to the VR 115-XA hosting APP 116-XA. For example, where the DPS 117-XS is a load balancing service for load balancing application traffic for the APP 116-XA across multiple application instances providing APP 116-XA (e.g., VR 115-XA hosting one application instance of APP 116-XA and to one or more other VRs 115 which may be hosting one or more other application instances of APP 116-XA (which are omitted for purposes of clarity)), the configuration of flow connectivity for the DPS 117-XS may include (1) configuring the v-switch 114 to provide the ingress application traffic intended for the APP 116-XA to the VR 115-XS hosting DPS 117-XS, before providing the application traffic to the VR 115-XA hosting APP 116-XA, such that the DPS 117-XS can provide the load balancing service for the ingress application traffic before it reaches the APP 116-XA and (2) configuring the v-switch 114 to provide the ingress application traffic that is received from DPS 117-XS (e.g., multiple ingress application traffic flows including respective portions of the application traffic intended for multiple application instances providing APP 116-XA based on load balancing of the application traffic of APP 116-XA by DPS 117-XS) to the multiple VRs 115 hosting the multiple application instances providing APP 116-XA (e.g., to VR 115-XA hosting on application instance of APP 116-XA and to the one or more other VRs 115 which may be hosting one or more other application instances of APP 116-XA (which, again, are omitted for purposes of clarity)). It will be appreciated that the foregoing description is only exemplary for two particular types of data plane services and that various other configurations of flow connectivity may be supported for these or other data plane services.

The DPS 117-XS that is deployed for APP 116-XA may be modified. The DPS 117-XS that is deployed for APP 116-XA may be modified in various ways under various conditions. The configuration of the DPS 117-XS may be modified (e.g., modifying one or more of the capabilities, processes, software instructions, rules, policies, or the like). The flow connectivity for the DPS 117-XS may be modified. It will be appreciated that some modifications to DPS 117-XS may include modifications to both the configuration of the DPS 117-XS and the flow connectivity for the DPS 117-XS. The DPS 117-XS that is deployed for APP 116-XA may be dynamically modified based on a request by the tenant of APP 116-XA for which the DPS 117-XS is deployed. The DPS 117-XS that is deployed for APP 116-XA may be dynamically modified automatically based on conditions associated with the VR 115-XA running the APP 116-XA (e.g., central processing unit (CPU) usage, memory usage, or the like), conditions associated with the APP 116-XA (e.g., based on scale-out or scale-in of the APP 116-XA, based on changes in the application traffic of APP 116-XA, or the like), conditions associated with the VR 115-XS running the DPS 117-XS (e.g., CPU usage, memory usage, or the like), conditions associated with the DPS 117-XS (e.g., based on scale-out or scale-in of the DPS 117-XS, based on service event rates associated with the service provided by DPS 117-XS, or the like), conditions on the server 110, or the like, as well as various combinations thereof. In at least some embodiments, such as where scale-out or scale-in of the DPS 117-XS is performed (as discussed further below), modification of the DPS 117-XS may include changes to the underlying virtual resource(s) supporting DPS 117-XS and to the flow connectivity of the underlying virtual resource(s) supporting DPS 117-XS. It will be appreciated that the DPS 117-XS that is deployed for APP 116-XA may be modified in various other ways, under various other conditions, or the like, as well as various combinations thereof.

The DPS 117-XS may be scaled out (e.g., by instantiating an additional virtual resource 115 on server 110 and configuring the data plane service 117-XS on the additional virtual resource 115 (e.g., as an additional data plane service instance for data plane service 117-XS)) and scaled in (e.g., by terminating an additional virtual resource 115 on server 110 that is running data plane service 117-XS as an additional data plane service instance for data plane service 117-XS). For example, when DPS 117-XS is scaled out due to excessive application traffic for APP 116-XA, an additional DPS instance (117-XS') is instantiated in another VR (115-XS'), and the existing flow connectivity for DPS 117-XS is modified to incorporate 115-XS' for data plane service scale out (e.g., in the case of a monitoring service, flow connectivity is modified such that application flows for APP 116-XA will be mirrored to VR 115-XS half of the time and to VR 115-XS' the other half of the time). For example, when DPS 117-XS is scaled in due to a drop in application traffic for APP 116-XA, an existing DPS instance (117-XS') running in an existing VR (115-XS') is terminated, and the existing flow connectivity for DPS 117-XS and DPS 117-XS' is modified to remove DPS 115-XS' for data plane service scale in (e.g., in the case of a monitoring service, flow connectivity is modified such that application flows for APP 116-XA that were previously mirrored to VR 115-XS half of the time and to VR 115-XS' the other half of the time will only be sent to VR 115-XS). It will be appreciated that scale-out and scale-in, as well as other types of modifications of DPS 117-XS may involve other types of modifications.

The DPS 117-XS that is deployed for APP 116-XA may be terminated. The termination of the DPS 117-XS that is deployed for APP 116-XA may be performed by the data plane services agent 119. The data plane services agent 119 may terminate the DPS 117-XS based on a request from the data plane services manager 130. The request from the data plane services manager 130 may be initiated by the data plane services manager 130 based on a request from service management system 140 (e.g., where the tenant requests that the DPS 117-XS for the APP 116-XA be terminated or where the tenant requests that the APP 116-XA be terminated such that the DPS 117-XS is no longer needed for the APP 116-XA). The DPS 117-XS that is deployed for APP 116-XA may be terminated under various conditions (e.g., based on a request by the tenant, based on a determination that the APP 116-XA is being terminated, or the like, as well as various combinations thereof). It will be appreciated that termination of the DPS 117-XS may also trigger termination of the VR 115-XS on which the DPS 117-XS was running (where the termination of the VR 115-XS on which the DPS 117-XS was running may be controlled by the cloud orchestration agent 118, which may be under the control of the cloud orchestration system 120).

The cloud orchestration agent 118 is configured to provide cloud orchestration functions, which may include cloud orchestration functions related to supporting deployment and management of data plane services on the server 110 for applications running on the server 110. The cloud orchestration agent 118, as discussed above, may be configured to create and destroy VRs 115 for APPs 116, DPSs 117, and the like. The cloud orchestration agent 118, as discussed above, may be configured to create and destroy VRs 115 based on requests from the cloud orchestration system 120. The cloud orchestration agent 118 may be configured to create and destroy VRs 115 based on requests from the cloud orchestration system 120 where the requests from the cloud orchestration system 120 may be related to requests received by the data plane services manager 130 from service management interface system 140, may be related to monitoring feedback received by the data plane services manager 130 from data plane services agent 119, or the like, as well as various combinations thereof). The cloud orchestration agent 118 may be configured to provide various other cloud orchestration functions for supporting deployment and management of DPSs 117 on the server 110 for APPs 116 running on the server 110.

The data plane services agent 119 is configured to provide data plane services functions to support deployment and management of DPSs 117 on the server 110 for APPs 115 running on the server 110.

The data plane services agent 119, as discussed above, may be configured to configure DPSs 117 for APPs 116. For example, the data plane services agent 119 may be configured to configure the DPSs 117 to run on VRs 115. For example, the data plane services agent 119 may be configured to configure the flow connectivity for DPSs 117 (e.g., mirroring such that application traffic is handled by the DPS 117 and its associated APP 116 in parallel, chaining such that application traffic is handled by the DPS 117 and its associated APP 116 in series, or the like). The data plane services agent 119 may be configured to configure a DPS 117 for an APP 116 where the configuration is an initial configuration of the DPS 117, a reconfiguration of the DPS 117 (e.g., based on a request of the tenant, based on monitoring performed by the data plane services agent 119 that is related to use of DPS 117 with APP 116, or the like), or the like. The data plane services agent 119 may be configured to provide various other configuration functions for configuring DPSs 117 for APPs 116.

The data plane services agent 119 may be configured to perform monitoring related to DPSs 117 and to perform management actions for the DPSs 117 that are determined based on the monitoring related to the DPSs 117.

The data plane services agent 119, as noted above, may be configured to perform monitoring related to DPSs 117. The monitoring related to a DPS 117 (illustratively, DPS 117-XS) may include monitoring the DPS 117, monitoring the VR 115 on which the DPS 117 is running, monitoring the APP 116, monitoring the VR 115 on which the APP 116 is running, or the like, as well as various combinations thereof. The monitoring of the DPS 117 may include monitoring the operation of the DPS 117 (e.g., the operation of the DPS 117 in handling the volume of application traffic), monitoring related to the specific data plane service (e.g., monitoring packet drop rates where DPS 117 is an intrusion detection service or a firewall service), or the like, as well as various combinations thereof. The monitoring of the APP 116 may include monitoring the operation of the APP 116 (e.g., the operation of the APP 116 in handling the volume of application traffic), monitoring related to the specific application, or the like, as well as various combinations thereof. The monitoring of the VRs 115 (e.g., the VR 115 on which the DPS 117 is running or the VR 115 on which the APP 116 is running) may include monitoring CPU usage of the VR 115, memory utilization of the VR 115, I/O resource usage of the VR 115, or the like, as well as various combinations thereof. The monitoring related to a DPS 117 may include various other types of monitoring which may be used to manage use of the DPS 117 for the APP 116.

The data plane services agent 119, as noted above, may be configured to perform management actions for the DPSs 117 that are determined based on the monitoring related to the DPSs 117. The management actions includes scaling the DPSs 117 (e.g., performing scale-out by adding one or more additional data plane service instances, performing scale-in by removing one or more data plane service instances, or the like), reconfiguring the DPSs 117 (e.g., reconfiguring the operation of the DPSs 117, reconfiguring the flow connectivity for the DPSs 117, or the like, as well as various combinations thereof), or the like. The management actions may be initiated by the data plane services agent 119 locally without providing monitoring feedback to the data plane services manager 130 for processing (e.g., the data plane services agent 119 has rules for determining, based on monitoring related to the DPS 117, that a management action is to be performed for the DPS 117). The management actions may be performed by the data plane services agent 119 based on management action instructions received from the data plane services manager 130 (e.g., the data plane services agent 119 provides monitoring feedback to the data plane services manager 130, the data plane services manager 130 processes the monitoring feedback and identifies that a management action is to be performed, the data plane services manager 130 informs the data plane services agent 119 that a management action is to be performed, and the data plane services agent 119 performs the management action responsive to the indication from the data plane services manager 130). It is noted that the monitoring feedback provided from the data plane services agent 119 to the data plane services manager 130 may trigger data plane services manager 130 to initiate one or more management actions via the cloud orchestration agent 118 (e.g., scale-out or scale-in of the DPS 117 via addition or removal of VRs 115 for data plane service instances of the DPS 117 via cloud orchestration agent 118).

The data plane services agent 119 may be configured to provide various other functions for performing monitoring related to DPSs 117 and performing management actions for the DPSs 117 that are determined based on the monitoring related to the DPSs 117.

The data plane services agent 119 may be configured to provide various other data plane services functions for supporting deployment and management of DPSs 117 on the server 110 for APPs 116 running on the server 110.

The server 110 may be configured to provide various other functions in order to support deployment and management of DPSs 116 on the server 110 for APPs 116 running on the server 110.

The cloud orchestration system 120 is configured to provide cloud orchestration functions, which may include cloud orchestration functions related to supporting deployment and management of DPSs 117 on the server 110 for APPs 116 running on the server 110. The cloud orchestration system 120 may be configured to control creation and destruction of VRs 115 by sending requests to the cloud orchestration agent 118. The cloud orchestration system 120 may be configured to initiate creation and destruction of VRs 115 based on requests received from data plane services manager 130. The requests received by cloud orchestration system 120 from data plane services manager 130 may be related to requests received by the data plane services manager 130 from service management interface system 140, may be related to monitoring feedback received by the data plane services manager 130 from data plane services agent 119, or the like, as well as various combinations thereof). The cloud orchestration system 120 may be configured to provide various other cloud orchestration functions for supporting deployment and management of DPSs 117 on the server 110 for APPs 116 running on the server 110.

The data plane services manager 130 is configured to provide data plane services functions to support deployment and management of DPSs 117 on the server 110 for APPs 116 running on the server 110. The data plane services manager 130 may be configured to map DPSs 117 to the APPs 116 for which the DPSs 117 are running, to map DPSs 117 to VRs 115 on which they are running, or the like, as well as various combinations thereof. The data plane services manager 130 may be configured to control creation and destruction of VRs 115 via cloud orchestration system 120 (e.g., initial creation of VRs 115 for APPs 116 and DPSs 117, creation or destruction of VRs 115 for scale-out or scale-in of APPs 116 and DPSs 117, final destruction of VRs 115 for APPs 116 and DPSs 117, or the like, as well as various combinations thereof). The data plane services manager 130 is configured to control configuration of DPSs 117 for APPs 116 via the data plane services agent 119, which may be based on requests received from service management interface system 140, evaluation of monitoring feedback received by the data plane services manager 130 from data plane services agent 119, or the like, as well as various combinations thereof. The data plane services manager 130 is configured to provide various other data plane services functions to support deployment and management of DPSs 117 on the server 110 for APPs 116 running on the server 110.

The service management interface system 140 is configured to provide service management interface functions related to supporting deployment and management of DPSs 117 on the server 110 for APPs 116 running on the server 110. The service management interface system 140 may be configured to provide a tenant-facing service management interface that offers tenants various views of their DPSs 117 associated with their APPs 116. For example, service management interface system 140 may be configured to provide a tenant-facing service management interface that offers tenants an aggregate view of distributed instances of their DPSs 117. The service management interface system 140 may be configured to hide from the tenants the complexity of the distributed service instances of their DPSs 117 (e.g., from the perspective of a tenant a deployed data plane service is automatically scaled-out and scaled-in independent of the amount of VRs 115 being serviced or the associated application traffic level). The service management interface system 140 may be configured to provide various other service management interface functions related to supporting deployment and management of DPSs 117 on the server 110 for APPs 116 running on the server 110.

The datacenter communication system 100 may be configured to provide various other functions in order to support the deployment and management of data plane services.

It will be appreciated that, although the networking details of datacenter communication system 100 are omitted from FIG. 1 for purposes of clarity, any suitable types of datacenter networking may be used to support the communications between the various elements of datacenter communication system 100. For example, the server 110 may be deployed within a rack (with other servers) having a top-of-rack switch, the top-of-rack switch (and other top-of-rank switches deployed within other racks) may be communicatively connected to one or more aggregating switches, the one or more aggregating switches may be communicatively connected to one or more gateway devices operating as gateways for the datacenter environment, and so forth. For example, tenant traffic of tenant applications hosted on server 110 (including tenant traffic remaining within datacenter communication system 100 and tenant traffic which enters or leaves datacenter communication system 100) may be supported using such communications infrastructure, control traffic within datacenter communication system 100 may be supported using such communications infrastructure, and so forth. It is noted that various other networking arrangements are contemplated.

It will be appreciated that although primarily presented herein with respect to embodiments in which there is a 1:1 relationship between an application and a data plane service being provided for the application (illustratively, DPS 117-XS associated with APP 116-XA), a single data plane service may be provided for multiple tenant applications of a tenant or multiple different tenants, multiple data plane services may be provided for a single tenant application of a tenant (e.g., using a single set of service instances for each of the data plane services, using separate sets of service instances for the different data plane services, or a combination thereof), multiple data plane services may be provided for multiple tenant applications of a tenant or multiple tenants, or the like, as well as various combinations thereof. It will be appreciated that, where multiple data plane services are provided (e.g., for a single tenant application of a tenant, for multiple tenant applications of a tenant or multiple tenants, or the like), the data plane services may be provided in parallel, serially (e.g., providing a data plane services service chain), or the like, as well as various combinations thereof.

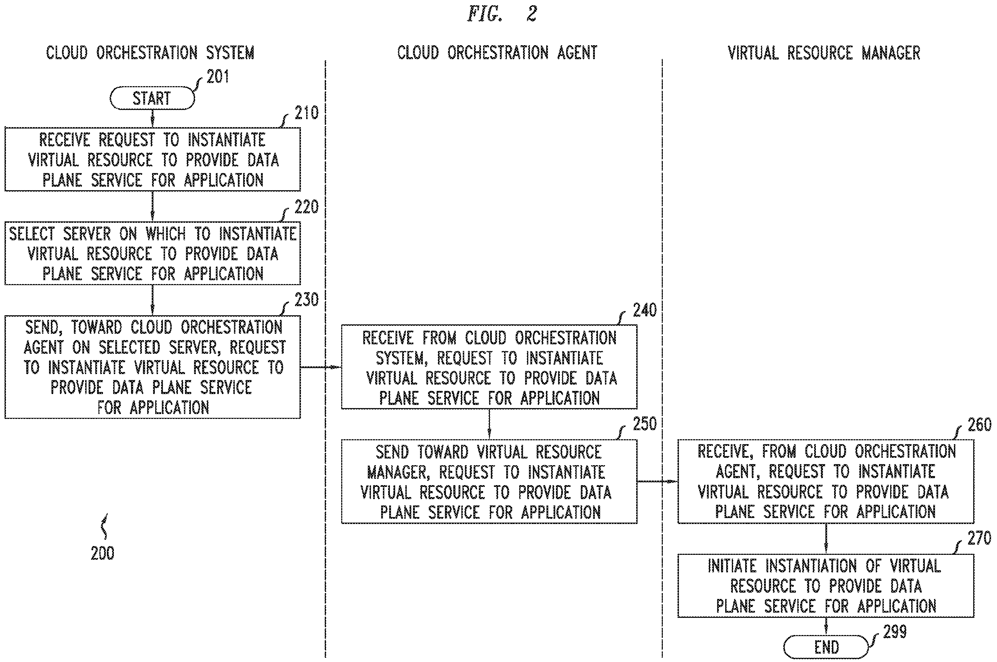

FIG. 2 depicts an exemplary method by which elements of the exemplary datacenter communication system configure and manage virtual resources to support data plane services for applications. As depicted and described with respect to FIG. 2, various functions of the method 200 are performed by a cloud orchestration system (e.g., cloud orchestration system 120 of FIG. 1), a cloud orchestration agent (e.g., cloud orchestration agent 118 of FIG. 1), and a virtual resources manager (e.g., VRM 113 of FIG. 1). As described with respect to FIG. 2, various functions of method 200 may be performed in conjunction with communications by a services management interface system (e.g., services management interface system 140 of FIG. 1) or a data services management system (e.g., data services management system 130 of FIG. 1). It will be appreciated that, although primarily presented herein as being performed serially, at least a portion of the functions of method 200 may be performed contemporaneously or in a different order than as presented with respect to FIG. 2.

At block 201, method 200 begins.

At block 210, the cloud orchestration system receives a request to instantiate a VR. The request to instantiate the VR is a request to instantiate a VR in order to provide a DPS for an APP running on a server. The request to instantiate the VR may be received from a service management interface system (e.g., responsive to a request by the tenant of the APP to provide the DPS for the APP). The request to instantiate the VR may be received from a data services management system (e.g., based on a determination by the data services management system, based on monitoring feedback received by the data services management system from a data services management agent, to instantiate another VR to support another data plane service instance for the DPS provided for the APP). The cloud orchestration system may receive the request to instantiate the VR responsive to any other suitable trigger condition.

At block 220, the cloud orchestration system selects a server on which the VR is to be instantiated in order to provide the DPS for the APP. The cloud orchestration system may select the server on which the APP is running (such that the APP and the DPS for the APP run on the same server) or a server that is different than the server on which the APP is running. The cloud orchestration system may be configured to prefer selection of the server on which the APP is running. The cloud orchestration system may be configured to select a server that is different than the server on which the APP is running responsive to detection of a condition (e.g., based on a determination by the cloud orchestration system that the server on which the APP is running does not have capacity to support the DPS for the APP and, thus, that the DPS for the APP needs to be deployed on a different server, such as a different server within the same rack, a different server in an adjacent rack, or the like). The cloud orchestration system may be configured to identify the server on which the APP is running (e.g., for purposes of attempting to select that server when feasible). The server on which the APP is running may be identified from the request to instantiate the virtual resource. The cloud orchestration system may select a server on which the VR is to be instantiated in various other ways.

At block 230, the cloud orchestration system sends, toward a cloud orchestration agent on the selected server, a request to instantiate a VR. The request to instantiate the VR, again, is a request to instantiate the VR in order to provide the DPS for the APP.

At block 240, the cloud orchestration agent on the server receives, from the cloud orchestration system, the request to instantiate the VR. The request to instantiate the VR, again, is a request to instantiate the VR in order to provide the DPS for an APP running on a server.

At block 250, the cloud orchestration agent sends, toward a virtual resource manager on the selected server, a request to instantiate a VR. The request to instantiate the VR, again, is a request to instantiate the VR in order to provide the DPS for the APP.

At block 260, the virtual resource manager on the selected server receives, from the cloud orchestration agent, the request to instantiate the VR. The request to instantiate the VR, again, is a request to instantiate the VR in order to provide the DPS for the APP.

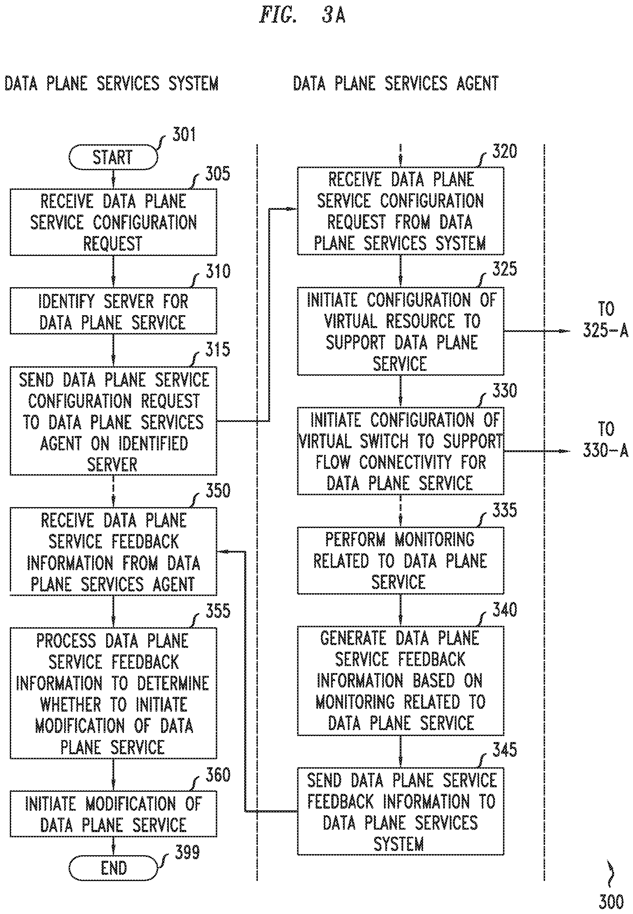

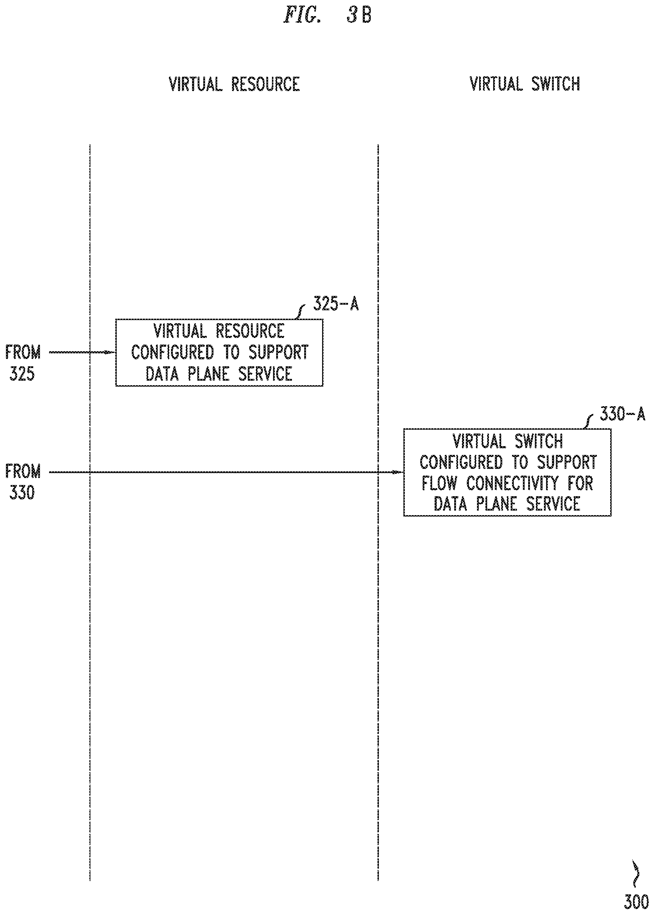

At block 270, the virtual resource manager on the selected server initiates instantiation of the VR. The VR may be a VM, a VC, a process running on a host virtual resource manager, or the like. The VR, once instantiated, is available for use in running the DPS for the APP. The configuration of the VR to run the DPS for the APP may be performed as depicted and described with respect to FIG. 3.

At block 299, method 200 ends.

It will be appreciated that, although primarily presented with respect to an embodiment for instantiating a VR in order to provide a DPS for an APP, method 200 of FIG. 2 also may be configured to support reconfiguration of a VR providing a DPS for an APP, termination of a VR providing a DPS for an APP, or the like, as well as various combinations thereof.

FIG. 3 depicts an exemplary method by which elements of the exemplary datacenter communication system configure and manage data plane services for applications. As depicted and described with respect to FIG. 3, various functions of the method 300 are performed by a data services management system (e.g., data services management system 130 of FIG. 1), a data services management agent (e.g., data services management agent 119 of FIG. 1), a virtual resource (e.g., a VR 115 of FIG. 1), and a virtual switch (e.g., v-switch 114 of FIG. 1). As described with respect to FIG. 3, various functions of method 300 may be performed in conjunction with communications with a cloud orchestration system (e.g., cloud orchestration system 120 of FIG. 1). It will be appreciated that, although primarily presented herein as being performed serially, at least a portion of the functions of method 300 may be performed contemporaneously or in a different order than as presented with respect to FIG. 3.

At block 301, method 300 begins.

At block 305, the data plane services system receives a data plane service configuration request. The data plane service configuration request is a request for configuration of a DPS for an APP running on a server.

At block 310, the data plane services system identifies the server for the DPS. The server for the DPS is the server on which the VR has been instantiated for the DPS (which may be the same server on which the APP is running or a different server than the server on which the APP is running).

At block 315, the data plane services system sends a data plane service configuration request to a data plane services agent on the identified server. The data plane service configuration request may include data plane service configuration information for use in configuring the DPS on the VR and flow connectivity configuration information for use in configuring flow connectivity for the DPS. It is noted that, for the data plane services system, the method 300 proceeds from block 315 to block 350 (at which time the data plane services system starts receiving DPS feedback information) while other blocks of method 300 are performed by other elements (method 300 proceeds from block 315 to block 320).

At block 320, the data plane services agent on the identified server receives the data plane service configuration request from the data plane services system. The data plane service configuration request, as noted above, may include data plane service configuration information for use in configuring the DPS on the VR and flow connectivity configuration information for use in configuring flow connectivity for the DPS.

At block 325, the data plane services agent on the identified server initiates configuration of the DPS on the VR. The data plane services agent configures the VR to support the DPS. The data plane services agent may configure the VR to support the DPS based on the data plane service configuration information received in the data plane service request. The data plane services agent may configure the VR to support the DPS by providing data plane service functions to the VR for execution by the VR to provide the DPS. The data plane services agent may configure the VR to support the DPS by providing data plane service information (e.g., capabilities, processes, software instructions, rules, policies, or the like) to the VR for use by the VR to provide the DPS. The configuration of the VR to support the DPS for the APP is represented by block 325-A (which is indicated as being performed by the VR).

At block 330, the data plane services agent on the identified server initiates configuration of flow connectivity for the DPS on the virtual switch. The data plane services agent configures the virtual switch to support flow connectivity for the DSP (e.g., to provide ingress application traffic to the APP and the DPS in parallel, to provide ingress application traffic to the DPS before the ingress application traffic is provided to the APP, to provide egress application traffic that is sourced by the APP to the DPS before the egress application traffic is further propagated, or the like, as well as various combinations thereof. The data plane services agent may configure the virtual switch to support flow connectivity for the data plane service based on the flow connectivity configuration information received in the data plane service request. The data plane services agent may configure the virtual switch to support flow connectivity for the DPS by providing flow connectivity configuration information (e.g., one or more flow forwarding rules) to the virtual switch for use by the virtual switch to forward application traffic of the application in a manner that supports use of the DPS for the APP. The flow connectivity configuration information may include flow connectivity information which may be stored by the virtual switch for use in supporting flow connectivity for the DPS. The configuration of the virtual switch to support flow connectivity for the DPS is represented by block 330-A (which is indicated as being performed by the virtual switch).

At block 335, the data plane services agent on the identified server performs monitoring related to the DPS. The monitoring related to the DPS that is performed by the data plane services agent may include monitoring of the DPS, monitoring of the VR on which the DPS is running, monitoring of the APP for which the DPS is provided, monitoring of the VR on which the APP is running, or the like, as well as various combinations thereof. The monitoring related to the DPS that is performed by the data plane services agent may include control signaling between the data plane services agent and elements associated with the operation of the DPS for the APP (e.g., the VR on which the DPS is running, the VR on which the APP is running, the virtual switch supporting flow connectivity for the DPS, or the like, as well as various combinations thereof), which has been omitted from method 300 for purposes of clarity. The monitoring related to the DPS that is performed by the data plane services agent may produce information indicative of various conditions associated operation of the DPS for the APP (e.g., conditions associated with the DPS, conditions associated with the VR on which the DPS is running, conditions associated with the APP for which the DPS is provided, conditions associated with the VR on which the APP is running, or the like, as well as various combinations thereof). For example, the monitoring related to the DPS may include monitoring CPU usage levels of VRs (e.g., the VR hosting the DPS, the VR hosting the APP, or the like), monitoring application traffic levels (e.g., at the DPS, at the APP, or the like), monitoring packet handling events associated with operation of the DPS (e.g., packet drop events, packet transformation events, or the like), or the like, as well as various combinations thereof. It will be appreciated that various other types of monitoring may be performed.

At block 340, the data plane services agent on the identified server generates data plane service feedback information for the DPS. The data plane services agent on the identified server may generate data plane service feedback information for the DPS based on monitoring related to the data plane service. The data plane service feedback information may include information collected during the monitoring related to the data plane service. The data plane service feedback information may include information indicative of various conditions associated with operation of the DPS for the APP (e.g., the DPS is overloaded or under loaded, the APP is overloaded or under loaded, the VR hosting the DPS is overloaded or under loaded, the VR hosting the APP is overloaded or under loaded there is a problem with the operation of the DPS, or the like, as well as various combinations thereof). It will be appreciated that various other types of data plane service feedback information may be provided.

At block 345, the data plane services agent on the identified server sends the data plane service feedback information for the DPS to the data plane services system.

At block 350, the data plane services system receives the data plane service feedback information for the DPS from the data plane services agent on the identified server.

At block 355, the data plane services system processes the data plane service feedback information for the DPS to determine whether to initiate a modification of the DPS being provided for the APP. The processing of the data plane service feedback information for the DPS to determine whether to initiate a modification of the DPS being provided for the APP may include comparing received values of operational parameters with associated thresholds (e.g., CPU usage thresholds, traffic level thresholds, packet drop event thresholds, or the like), identifying specific events which indicate that a modification of the DPS being provided for the application is or may be necessary or desirable, or the like, as well as various combinations thereof.

At block 360, the data plane services system initiates a modification of the DPS being provided for the APP. The data plane service system may initiate a modification the DPS being provided for the APP based processing of the data plane service feedback information for the DPS to determine whether to initiate a modification of the DPS being provided for the APP.

The modification of the DPS being provided for the APP may include a reconfiguration of the DPS being provided for the APP.

The reconfiguration of the DPS being provided for the APP may include a reconfiguration of the DPS running on the VR. This may include a modification of executable instructions of the DPS, rules of the DPS, policies of the DPS, or the like, as well as various combinations thereof. This may include messaging from the data plane services system to the data plane services agent to cause the data plane services agent to reconfigure the DPS running on the VR (e.g., using a process similar to that discussed in blocks 320, 325, and 325-A).

The reconfiguration of the DPS being provided for the APP may include a reconfiguration of the flow connectivity for the DPS running on the VR. This may include a modification of the flow forwarding rules on the virtual switch for the DPS. This may include messaging from the data plane services system to the data plane services agent to cause the data plane services agent to reconfigure the virtual switch (e.g., using a process similar to that discussed in blocks 320, 330, and 330-A).

The modification of the DPS being provided for the APP includes a scaling of the DPS being provided for the APP.

The scaling of the DPS being provided for the APP may include a scale-out of the DPS (e.g., by adding one or more additional VRs and configuring one or more additional data plane service instances of DPS on the one or more additional VRs). This may include (1) messaging from the data plane services system to the cloud orchestration system to cause the cloud orchestration system to communicate with the cloud orchestration agent in order to request instantiation of one or more additional VRs and (2) messaging from the data plane services system to the data plane services agent to configure the one or more additional VRs to run the one or more additional service instances of the DPS (e.g., using a process similar to that discussed in blocks 320, 325, and 330).

The scaling of the DPS being provided for the APP may include a scale-in of the DPS (e.g., by terminating one or more data plane service instances of the DPS on one or more existing VRs and terminating the one or more existing VRs previously running the one or more data plane service instances that were terminated for the DPS).

The modification of the DPS being provided for the APP may include other modifications related to the configuration or operation of the DPS for the APP.

At block 399, method 300 ends.

It will be appreciated that, although method 300 of FIG. 3 is primarily presented with respect to an embodiment in which a determination is made that a modification is to be made for the DPS, a determination may be made that a modification is not to be made for the DPS (in which case data plane services agent may continue to monitor the DPS and provide data plane service feedback information for the DPS and the data plane services system may continue to receive and process data plane service feedback information for the DPS to determine whether a modification is to be made for the DPS).

It will be appreciated that, although primarily presented with respect to an embodiment for configuring a DPS for an APP, the method 300 of FIG. 3 also may be configured to support reconfiguration of a DPS for an APP, termination of a DPS for an APP, or the like, as well as various combinations thereof.

It will be appreciated that, although method 200 of FIG. 2 and method 300 of FIG. 3 are primarily depicted and described as being separate processes, various portions of method 200 of FIG. 2 and method 300 of FIG. 3 may be combined in various ways to provide the various sets of functions used by the various elements of the system to support DPSs for APPs (e.g., combining functions to provide a set of functions used by the data plane services system, combining functions to provide a set of functions used by the cloud orchestration system, combining functions to provide a set of functions used by the cloud orchestration agent, combining functions to provide a set of functions used by the data plane services agent, and so forth).

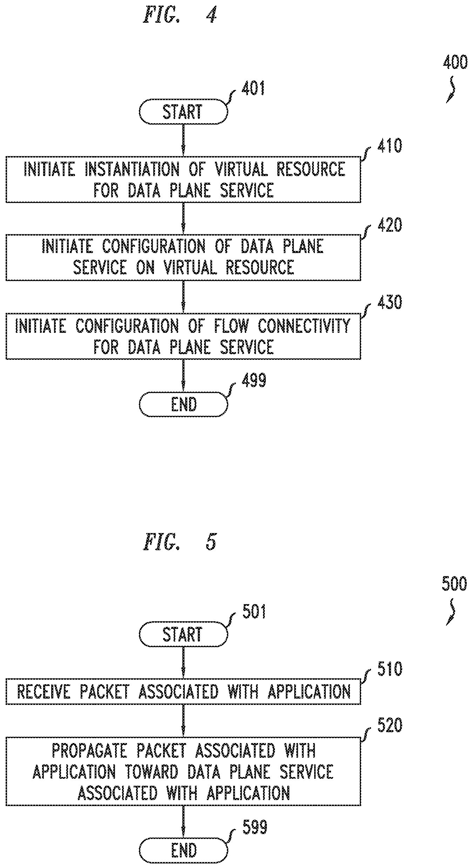

FIG. 4 depicts an exemplary method by which an element of the exemplary datacenter communication system provides a data plane service for an application. It will be appreciated that method 400 of FIG. 4 may be performed by a data services management system (e.g., data services management system 130 of FIG. 1), a server hosting the application and its associated data plane service (e.g., server 110 of FIG. 1), or the like). It will be appreciated that, although primarily presented herein as being performed serially, at least a portion of the functions of method 400 may be performed contemporaneously or in a different order than as presented with respect to FIG. 4.

At block 401, method 400 begins.

At block 410, instantiation of a VR is initiated. The VR is instantiated for purposes of running the DPS for the APP. In embodiments in which method 400 is performed by a data services management system, instantiation of the VR may be initiated by the data services management system sending a virtual resource instantiation request to a cloud orchestration system that is configured to control instantiation of VRs within the datacenter communication system. In embodiments in which method 400 is performed by the server, block 410 may be performed by a cloud orchestration agent on the server and instantiation of the VR may be initiated by the cloud orchestration agent sending a virtual resource instantiation request to a virtual resource manager on the server that is configured to control instantiation of VRs on the server.

At block 420, configuration of the DPS for the APP is initiated. The DPS is configured on the VR that was instantiated for the purpose of running the DPS for the APP. In embodiments in which method 400 is performed by a data services management system, configuration of the DPS may be initiated by the data services management system sending a data plane service configuration request to a data plane services agent that is running on the server. In embodiments in which method 400 is performed by the server, block 420 may be performed by a data plane services agent on the server and configuration of the DPS for the APP may be initiated by the data plane services agent sending a data plane service configuration request to the VR on which the DPS is being deployed.

At block 430, configuration of flow connectivity for the DPS is initiated. The flow connectivity for the DPS is configured on a virtual switch supporting communications by the DPS (and, optionally, on the VR on which the DPS is running and/or on the VR on which the APP is running). In embodiments in which method 400 is performed by a data services management system, configuration of flow connectivity for the DPS may be initiated by the data services management system sending a flow connectivity configuration request to a data plane services agent that is running on the server. In embodiments in which method 400 is performed by the server, block 430 may be performed by a data plane services agent on the server and configuration of flow connectivity for the DPS for may be initiated by the data plane services agent sending a flow connectivity configuration request to the virtual switch that is supporting communications by the DPS.

At block 499, method 400 ends.

It will be appreciated that, although primarily presented with respect to an embodiment in which the configuration of the DPS and the configuration of flow connectivity for the DPS are provided separately, in at least some embodiments the configuration of the DPS and the configuration of flow connectivity for the DPS may be provided together (e.g., in embodiments in which method 400 is performed by a data services management system, configuration of the DPS and flow connectivity for the DPS may be initiated by the data services management system sending configuration request to a data plane services agent that is running on the server, and the data plane services agent may then initiate configuration of the DPS and configuration of the flow connectivity for the DPS).

FIG. 5 depicts an exemplary method by which elements of the exemplary datacenter communication system communicate application traffic for applications while also utilizing data plane services for the applications. It will be appreciated that method 500 of FIG. 5 may be performed by a virtual switch of the server on which the data plane service is deployed (e.g., on v-switch 114 on server 110 of FIG. 1). It will be appreciated that, although primarily presented herein as being performed serially, at least a portion of the functions of method 500 may be performed contemporaneously or in a different order than as presented with respect to FIG. 5.

At block 501, method 500 begins.

At block 510, a packet associated with an APP is received. The packet may be an ingress packet that is intended for delivery to the APP or an egress packet sourced by the APP that is intended for delivery to a remote element (which may be within the datacenter or outside of the datacenter).

At block 520, the packet associated with the APP is propagated toward the DPS associated with the APP. The packet associated with the APP may be directed to the DPS based on flow connectivity information associated with the DPS. The packet associated with the APP, for an ingress packet intended for delivery to the APP, may be directed to the APP and to the DPS associated with the APP in parallel, may be directed to the DPS rather than being directed to the APP such that the ingress packet may be processed by the DPS prior to delivery of the ingress packet to the APP or the like. The packet associated with the APP, for an egress packet sourced by the APP that is intended for delivery to a remote element, may be directed to the DPS associated with the APP before being further propagated toward the remote element such that the egress packet may be processed by the DPS prior to further propagation toward the remote element.

At block 599, method 500 ends.

As previously discussed, the data plane services support mechanism depicted and described with respect to FIG. 1 may be supported using a NIC offloading capability. For example, referring again to FIG. 1, it is noted that, in at least some embodiments, the data plane services support mechanism that is depicted and described with respect to FIG. 1 may be supported based on configuration of v-switch 114 to support NIC offloading. As indicated above, use of NIC offloading may provide improved support for the data plane services support mechanism. For example, NIC offloading may be used to create large packets and switch the large packets in their entirety using virtual switches (illustratively, using the v-switch 114 of FIG. 1), thereby boosting the performance of the virtual switches (without having to use extra processing cores) and, thus, accelerating packet processing which is used to provide the data plane services for the applications. The ability to use NIC offloading within this context is becoming more important as end server interconnect requirements continue to increase and, thus, make support for edge-based data plane services more difficult. For example, with the high degree of server multiplexing for virtualized workloads and with the rising demand for network I/O in tenant applications, server interconnects continue to evolve from 10GbE to 40GbE and 100GbE, and eventually toward 400GbE and beyond, and, thus, it is becoming increasingly more difficult to operate at line rate on commodity end servers (and, thus, will be increasingly more difficult to support various data plane services on commodity end servers at line rate). In many cases, in order to cope with various high-speed networking environments, various types of offloading have been introduced as a type of performance optimization for the networking stack, which has remained useful in boosting the scalability of networking applications. For example, in the ingress direction, various receive offloading techniques (e.g., large receive offload (LRO), TCP receive offload (TRO), generic receive offload (GRO), or the like), in which multiple incoming packets are aggregated to form a large packet, may be used for increasing the throughput of network connections by reducing CPU overhead (since creation of larger packets results in fewer packets that need to be processed). Similarly, for example, in the egress direction, various segmentation offloading techniques (e.g., large segment offload (LSO), TCP segmentation offload (TSO), generic segment offload (GSO), or the like), in which incoming large packets are segmented into smaller packets, may be used for increasing the throughput of network connections by reducing CPU overhead (since use of larger packets before segmentation results in fewer packets that need to be processed).

The use of offloading as a type of performance optimization for the networking stack has been provided in various ways. For example, OSes have introduced the concept of "offloading" as performance optimization for the networking stack. However, OS-driven offload still takes a toll on the host kernel CPU, which can grow with NIC speed and workload. By contrast, hardware offloading, such as NIC offloading, provides various benefits without the drawbacks of OS-based offloading. Accordingly, with increasingly more powerful and sophisticated NIC hardware, there is a renewed interest in NIC offloading (e.g., in areas of user-level networking, storage networking, and even general operating systems) and, thus, many NIC cards now support certain offload features. For example, 10GbE and 40GbE cards typically support various hardware offload features such as receive offload capabilities (e.g., LRO, TRO, GRO, or the like), segmentation offload capabilities (e.g., LSO, TSO, GSO, or the like), checksum offload, tunneling offload, or the like. Accordingly, in at least some embodiments, NIC offloading, which leverages the offload capabilities of modern NIC hardware, may be used to mitigate the gap between growing NIC speed and compute capacity of end servers. As discussed further below, NIC offloading may be particularly useful in various virtualizations environments (e.g., in datacenter environments such as the datacenter communication network 100 of FIG. 1). For example, within the context of edge-based data plane services, where intelligent network traffic processing is pushed to the edge (e.g., onto the end hosts as discussed herein with respect to FIG. 1), NIC offloading may be used to support large packets (e.g., eliminating the physical constraint of a 1500 byte maximum transmission unit (MTU)), without relying on the host kernel, such that streams of large packets are available for the data plane services and, thus, NIC offloading may be used to accelerate edge-based data plane services (since, as discussed above in conjunction with the types of offloading that may be supported, the number of packets per second is directly translated into CPU cycles in traditional interrupt-driven packet processing). For example, within an SDN context, lower packets per second also means less CPU cycles in switching and less framing overhead in other network functions such that, by leveraging NIC offloading to support large packets, the large packet benefits may be realized for free (without consuming host CPUs). For example, within an NFV environment, the role of NIC offloading can become more pronounced as multiple network functions may be chained together, and possibly tunneled through multiple physical NICs across different end servers. However, as discussed further below, while there are various advantages to using NIC offloading in various types of virtualization environments, NIC offloading has not been successfully utilized in virtualization environments, at least partially due to the lack of support for NIC offloading in virtual switches operating within the virtualization environments.

As noted above, while there are various advantages to using NIC offloading in various types of virtualization environments, NIC offloading has not been successfully utilized in virtualization environments, at least partially due to the lack of support for NIC offloading in virtual switches operating within the virtualization environments. In general, the networking stacks of virtual switches are not configured to support reception, forwarding, or switching of large packets; rather, the networking stack of virtual switches are typically only configured to support reception, forwarding, or switching of network packets (e.g., MTUs, such as Ethernet MTUs or other types of network packets). This may be at least partially due to the fact that there is no standard for the various offloading capabilities in vNICs or pNICs and, thus, the different offloading implementations provided by NICs of different companies can cause incompatibility within virtual switching. More specifically, virtual switches may not be able to support large packets for NIC offloading due to a mismatch of the NIC expectations of the virtual switch (e.g., packet metadata expected by the virtual switch) and the large packets actually generated by the NICs and provided to the virtual switch (e.g., packet metadata actually received by the virtual switch). For example, when the hypervisor kernel, such as Linux, runs a virtual switch interconnecting virtual NICs (vNICs) and physical NICs (pNICs), large packets due to offload might run astray from the normal packet flow. In other words, while NIC large packet offload may be used for large packet generation and consumption on the host kernel network stack, it typically cannot be used for reception, forwarding, or switching at the virtual switch. As a result, virtual switching or bridging solutions typically do not use NIC offloading, leaving this hardware capacity untapped.

As noted above, referring again to FIG. 1, at least some embodiments of the data plane services support mechanism that is depicted and described with respect to FIG. 1 may be supported based on configuration of v-switch 114 to support NIC offloading. The datacenter communication system 100 may be configured to provide horizontal scaling of data plane services, where data plane services are deployed in situ with tenant applications at the edge, while fully exploiting available NIC offload. The datacenter communication system 100 may be configured to allow datacenter operators to deploy and manage, on behalf of tenants, NIC-accelerated data plane services right next to, or relatively close, to their applications on end hosts. These data plane services can be dynamically deployed on demand, and may be tied to specific tenant applications as part of their deployment configurations, thereby tending to provide tenants with richer software-defined, software-driven, and NIC-accelerated data plane services, beyond simple layer-2/3 access control that is typically available on software/hardware switches. The datacenter communication system 100 may be configured to combine an SDN-based architecture with centralized cloud orchestration, with the former providing flexibility in data plane service composition and the latter bringing scale-out properties to data plane service deployments, while also achieving fast data path performance by exploiting NIC-offloaded high performance software switching. The datacenter communication system 100 may be configured to support management (e.g., deployment, removal, scaling, and chaining) of individual data plane services in a centralized policy-driven while also ensuring that data plane services deployed for tenant applications are able to keep up with the data plane traffic rates of the tenant applications. The datacenter communication system 100 may be configured to support the performance requirements of line rate processing of large packets by data plane services by configuring v-switch 114 to exploit NIC offloading, by configuring v-switch 114 to switch large packets using NIC offloads. With respect to configuring v-switch 114 to exploit NIC offloading, it is noted that, while NIC offloading was originally designed for packets consumed and generated by the local network stack and is known to be incompatible with routing and forwarding, by properly offloading packet segmentation, aggregation, checksum computation, and tunneling processes from the kernel to the NIC hardware, the v-switch 114 is able to deliver lower per-packet overhead to guest applications and their co-located data plane services while reducing kernel overhead in software switching. Accordingly, in at least some embodiments, virtual switches (e.g., v-switch 114) may be configured to support NIC offloading such that NIC offloading may be used to support and improve deployment of data plane services at the datacenter edge.

It is noted that embodiments of modifying virtual switches to support NIC offloading are first described within the context of a specific type of virtual switch (namely, where v-switch 114 is implemented as an Open vSwitch (OVS) using a Linux operating system (OS)) and then described more generally (namely, where v-switch 114 may be considered to be a more generic v-switch, such as an OVS-based v-switch that is implemented independent of any specific OS implementation or any other suitable type of v-switch).

In at least some embodiments, a virtual switch implemented as an OVS may be configured to support NIC offloading (e.g., such that NIC offloading may be used to support and improve deployment of data plane services at the datacenter edge). In at least some embodiments, the kernel data path of OVS may be extended such that various packet handling functions (e.g., packet segmentation, aggregation, checksum computation, and tunneling (e.g., VXLAN)) may be fully offloaded to NIC hardware while receiving, forwarding, and transmitting packets on end hosts such as server 110.

In at least some embodiments, a virtual switch implemented as an OVS using a Linux OS may be configured to support NIC offloading (e.g., such that NIC offloading may be used to support and improve deployment of data plane services at the datacenter edge). In at least some embodiments, the Linux-based kernel data path of OVS may be extended such that various packet handling functions (e.g., packet segmentation, aggregation, checksum computation, and tunneling (e.g., VXLAN)) may be fully offloaded to NIC hardware while receiving, forwarding, and transmitting packets on end hosts such as server 110. The Linux OS supports transport of packets using a socket buffer (skb) data structure, where the skb data structure for transporting a packet includes the packet and packet metadata associated with the packet.

The configuration of a virtual switch implemented as an OVS using a Linux OS to support NIC offload may include identifying a location in the OVS code path where NIC offloading could potentially cause problems. The ovs_vport_receive(skb) routine receives packets from a NIC (e.g., a vNIC or a pNIC) using the skb data structure of the Linux kernel (e.g., each packet is transported using a respective skb data structure of the Linux kernel). The ovs_vport_receive(skb) routine passes the skb data structures including the packets, respectively, to the ovs_dp_process_received_packet(skb) routine. In the case of delivery of the packets by the virtual switch to an end host (namely, in which the end host is the consumer of the packets), the skb data structures including the packets are delivered to the end host, and the chain of the OVS code path completes without a problem. In the case of switching of the packets by the virtual switch, however, the skb data structures including the packets are forwarded to another virtual port via the ovs_vport_send(skb) routine. The actual transmitting operation on the port expects the packet metadata of the skb data structure (e.g., fields such as Large Packet Type, Segment Size, and Checksum) that is transporting the packets to be in specific formats for large packets. However, there is not currently any accepted format for the transport of large packets using the skb data structure and, thus, the format of the skb data structure that is received by the virtual switch from the NIC may be different than the format of the skb data structure that is supported (and, thus, expected) by the virtual switch. Table 1 illustrates different packet metadata formats of the skb data structure, illustrating the expected packet metadata format of the skb data structure that is expected by the virtual switch and actual packet metadata formats of the skb data structure that are used by different companies providing NIC offload implementations.

**Table 1**

| Metadata Field | Expected Format of Virtual Switch | Actual Format of NIC of Company 1 | Actual Format of NIC of Company 2 | Actual Format of NIC of Company 3 |
|---|---|---|---|---|
| Large Packet Type | IPv4 or IPv6 | 0 | 1 | 0 |
| Segment Size | number of bytes | 0 | 1448 | 1448 |
| Checksum | partial | not required | not required | not required |

As a result, due to the incompatibility between the packet metadata format of the skb data structure that is expected by the virtual switch and the packet metadata format of the skb data structure populated by different NICs for a large packet, the ovs_vport_send(skb) routine may drop the skb data structure transporting the large packet and, thus, drop the large packet such that it cannot be successfully switched by the virtual switch. Thus, configuration of the virtual switch implemented as an OVS using a Linux OS to support NIC offloading may include identifying that NIC offloading could cause problems between the ovs_vport_receive(skb) routine and the ovs_vport_send(skb) routine in the OVS code path of the virtual switch and configuring the virtual switch to prevent such problems between the ovs_vport_receive(skb) routine and the ovs_vport_send(skb) routine in the OVS code path of the virtual switch.

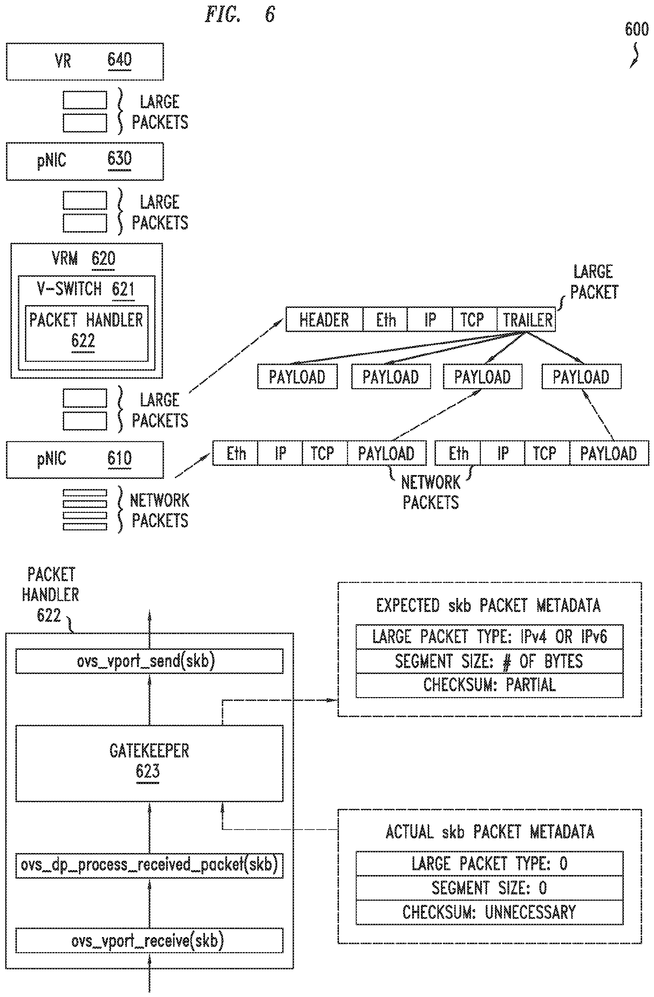

The configuration of a virtual switch implemented as an OVS using a Linux OS to support NIC offload may include modifying the OVS code path of the virtual switch based on identifying the location in the OVS code path where NIC offloading (e.g., LRO) could cause problems. As noted above, due to the incompatibility between the packet metadata format of the skb data structure that is expected by the virtual switch and the packet metadata format of the skb data structure used by different NICs for a large packet, the ovs_vport_send(skb) routine may drop the skb data structure transporting the large packet and, thus, drop the large packet such that it cannot be successfully switched by the virtual switch. Accordingly, in at least some embodiments, in order to solve this problem, an inline gatekeeper is introduced between the ovs_vport_receive(skb) routine and the ovs_vport_send(skb) routine in the OVS code path of the virtual switch. In at least some embodiments, in order to solve this problem, the inline gatekeeper is introduced between the ovs_dp_process_received_packet(skb) routine and the ovs_vport_send(skb) routine. The inline gatekeeper may be configured to sanitize packet metadata of the skb data structure transporting the large packet so that the skb data structure transporting the large packet can be successfully forwarded to the destination NIC, thereby enabling large packet-in and large packet-out software switching. The inline gatekeeper may maintain normal packet flow within the virtual switch implemented as an OVS using a Linux OS with negligible overhead while keeping the virtual switch implemented as an OVS using a Linux OS agnostic to the NIC hardware. It is noted that the inline gatekeeper may remain extensible for future vNIC/pNIC features. An exemplary configuration of a virtual switch implemented as an OVS using a Linux OS to support NIC offloading is depicted in FIG. 6.

FIG. 6 depicts an exemplary datacenter communication environment illustrating an exemplary configuration of an Open vSwitch based virtual switch to support NIC offloading.

As depicted in FIG. 6, the exemplary datacenter communication environment 600 includes a physical NIC (pNIC) 610, a virtual resource manager VRM 620 including a virtual switch (v-switch) 621, a physical NIC (pNIC) 630, and a virtual resource (VR) 640.

The exemplary datacenter communication environment 600 is configured to support flow of large packets (e.g., larger than MTUs, such as a concatenation of MTUs), rather than smaller network packets (e.g., MTUs) for VR 640. More specifically, the exemplary datacenter communication environment 600 is configured to support flow of large packets to VR 640 using receive offload (e.g., LRO, TRO, GRO, or the like) and is configured to support flow of large packets from VR 640 using transmit (or segment) offload (e.g., LSO, TSO, GSO, or the like). In general, whether the VR 640 is providing a tenant application or providing a data plane service for a tenant application, processing of large packets is generally preferred to processing of smaller network packets for performance reasons. It is noted that, given that a large packet includes a concatenation of multiple smaller packets, the term "concatenated packet" may be used in the place of the term "large packet" herein.

For example, for ingress packets flowing to VR 640, the pNIC 610 receives network packets (e.g., MTUs) and generates large packets (e.g., larger than MTUs) from the network packets (e.g., by concatenating multiple network packets to create respective large packets), the pNIC 610 provides the large packets to v-switch 621, the v-switch 621 receives the large packets from pNIC 610 and forwards the large packets to vNIC 630 (as discussed further below, the v-switch 621 is configured to support reception, switching, and forwarding of large packets), the pNIC 630 receives the large packets from the v-switch 621 and passes the large packets towards the VR 640 for processing, and the VR 640 receives and consumes the large packets.

Similarly, for example, for egress packets flowing from VR 640, the VR 640 sources large packets (e.g., larger than MTUs) and provides the large packets to the pNIC 630, the pNIC 630 receives the large packets and passes them to the v-switch 621, the v-switch 621 receives the large packets from pNIC 630 and forwards the large packets to pNIC 610 (as discussed further below, the v-switch 621 is configured to support reception, switching, and forwarding of large packets), the pNIC 610 receives the large packets from the v-switch 621 and extracts network packets (e.g., MTUs) from the large packet to recover the network packets, and the pNIC 610 forwards the network packets (e.g. toward a network for further propagation). The packet metadata of the skb data structure includes a Large Packet Type field (with an expected value of IPv4 or IPv6), a Segment Size field (with an expected value that is a number of bytes), and a Checksum field (with an expected value of "partial").

As depicted in FIG. 6, the arrangement of network packets and large packets is such that multiple network packets are transported using a large packet. For example, multiple network packets may be combined into a large packet by concatenating the payloads of the multiple network packets into a payload field of the large packet and header fields common to the multiple network packets (e.g., the TCP header, IP header, and Ethernet header) are used as a common header for the large packet. Similarly, for example, multiple network packets may be extracted from a large packet by removing the large packet header (e.g., the TCP header, IP header, and Ethernet header) from the large packet for association with each of the multiple network packets, extracting the network packet payloads from the payload field of the large packet, and prepending the large packet header of the large packet to the network packet payloads to recover the multiple network packets..

As further depicted in FIG. 6, transport of a large packet by v-switch 621 utilizes a special data structure. In a Linux-based implementation of v-switch 621, for example, the special data structure is the skb data structure. The operating system of the v-switch 621 transports the large packet within the skb data structure. The skb data structure includes the large packet (with the large packet header and the large packet payload) as well as packet metadata associated with the large packet. The packet metadata for the skb data structure may be in the form of an skb header including one or more skb header fields and an skb trailer including one or more skb trailer fields. As indicated above, the packet metadata of the skb data structure includes a Large Packet Type field (with an expected value of IPv4 or IPv6), a Segment Size field (with an expected value that is a number of bytes), and a Checksum field (with an expected value of "partial"). It is noted that, in the case of NIC offloading, encapsulation of the large packet within the skb data structure is performed by the NIC (e.g., pNIC 610 for ingress packets and pNIC 630 for egress packets) before the large packet is passed to the v-switch 621 and there may be a mismatch between the skb packet metadata format used by the NIC and the skb packet metadata format expected by the v-switch 621. The encapsulation of the large packet within the skb data structure may be performed by the NIC driver of the NIC. In at least some embodiments, as discussed further below, the v-switch 621 may be configured to correct this mismatch in order to ensure that the large packet can be handled by the v-switch 621.

As discussed above, the skb packet metadata format that is used by a particular NIC may not match the skb packet metadata format that is expected by the v-switch 621 (and, thus, required by the v-switch 621 to support switching of large packets using NIC offloading). The skb packet metadata format expected by the v-switch 621 includes a Large Packet Type field (with an expected value of IPv4 or IPv6), a Segment Size field (with an expected value that is a number of bytes), and a Checksum field (with an expected value of "partial"). However, as indicated above in Table 1 and illustrated in FIG. 6, the actual skb packet metadata that is populated by NICs provided by different companies may not conform to the skb packet metadata format expected by the v-switch 621. As such, v-switch 621 is configured to include a packet handler 622 that is configured to ensure that the skb packet metadata, of skb data structures transporting large packets, received at the v-switch 621 conform to the skb packet metadata format that is expected by the v-switch 621.

The packet handler 622 is configured to ensure that the skb packet metadata, of skb data structures transporting large packets, received at the v-switch 621 conform to the skb packet metadata format expected by the v-switch 621 by modifying the OVS data path to include a gatekeeper 623. The gatekeeper 623 of packet handler 622, as previously discussed, may be applied at any suitable location within the OVS data path (e.g., between the ovs_dp_process_received_packet(skb) routine and the ovs_vport_send(skb) routine, as illustrated in FIG. 6, or applied at any other suitable location within the OVS data path). The gatekeeper 623 may be configured to sanitize the skb packet metadata of an skb data structure transporting a large packet so that the skb data structure including the large packet can be successfully forwarded to the destination pNICs, thereby achieving large packet-in and large packet-out software switching. The gatekeeper 623 may be configured to modify the skb data structure such that the skb packet metadata conforms to the skb packet metadata format expected by the v-switch 621. The gatekeeper 623 may be configured to modify the skb data structure such that the skb packet metadata conforms to the skb packet metadata format expected by the v-switch 621, by modifying the existing skb packet metadata of the skb data structure received by the gatekeeper 623 to conform to the skb packet metadata format expected by the v-switch 621 (e.g., changing one or more values of one or more of the fields of the skb packet metadata).

For example, for a large packet received from a NIC provided by Company 1 in Table 1, the gatekeeper 623 may change the existing skb packet metadata of the skb data structure to conform to the skb packet metadata format expected by the v-switch 621 by changing the value of the Large Packet Type field from "0" to "IPv4" or "IPv6", by changing the value of the Segment Size field from "0" to the number of bytes, and by changing the value of the Checksum field from "not required" to "partial".

For example, for a large packet received from a NIC provided by Company 2 in Table 1, the gatekeeper 623 may change the existing skb packet metadata of the skb data structure to conform to the skb packet metadata format expected by the v-switch 621 by changing the value of the Large Packet Type field from "1" to "IPv4" or "IPv6", by changing the value of the Segment Size field from "1448" to the number of bytes, and by changing the value of the Checksum field from "not required" to "partial".

For example, for a large packet received from a NIC provided by Company 2 in Table 1, the gatekeeper 623 may change the existing skb packet metadata of the skb data structure to conform to the skb packet metadata format expected by the v-switch 621 by changing the value of the Large Packet Type field from "0" to "IPv4" or "IPv6", by changing the value of the Segment Size field from "1448" to the number of bytes, and by changing the value of the Checksum field from "not required" to "partial".

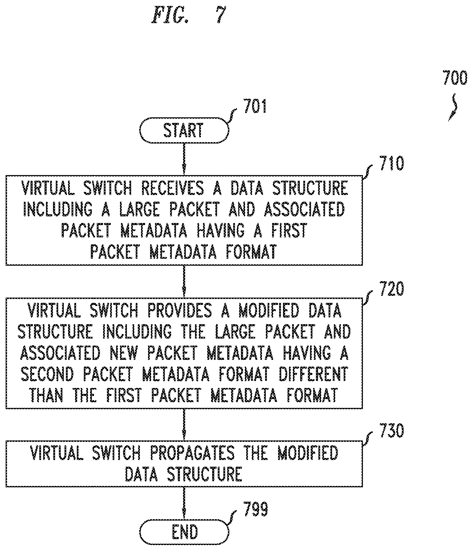

It will be appreciated that, while the foregoing embodiments are primarily presented within the context of a particular type of v-switch (namely, an OVS-based v-switch implemented using a Linux-based OS and, thus, using a Linux-based skb data structure as the OS packet data structure) and for particular types of NIC offloading (e.g., pNICs provided by companies supporting specific skb packet metadata formats), configuration of a v-switch to support reception, switching, and forwarding of large packets may be supported for various other types of v-switches and NIC offloading implementations. For example, v-switch 621 may be implemented as a Unix-based OS (e.g., a Berkeley Software Distribution (BSD) based OS) having an associated packet data structure (e.g., the mbuf data structure). For example, v-switch 621 may be implemented as a Microsoft Windows based OS having an associated packet data structure (e.g., the NET_BUFFER_LIST data structure). The v-switch 621 may be implemented using various other types of OSs and, thus, may use various other types of OS packet data structures (and associated OS packet metadata formats) for transporting various types of packets (e.g., large packets or other types of packets) via the v-switch 621. An exemplary embodiment of a more general process for supporting NIC offloading for virtual switches is presented with respect to FIG. 7.

FIG. 7 depicts an exemplary method for use by a virtual switch to support NIC offloading. It will be appreciated that the method 700 of FIG. 7 may be further understood by way of reference to the exemplary datacenter communication environment 600 FIG. 6. It will be appreciated that, although primarily presented herein as being performed serially, at least a portion of the functions of method 700 may be performed contemporaneously or in a different order than as presented with respect to FIG. 7.

At block 701, method 700 begins.

At block 710, the virtual switch receives a data structure transporting a large packet. The data structure includes the large packet and packet metadata associated with the large packet. The virtual switch may receive the data structure transporting the large packet from a network interface card (e.g., pNIC or vNIC) that is configured to support NIC offloading.

The data structure, as noted above, includes the large packet. The large packet may be larger than a network packet (e.g., MTU or other suitable type of network packet). The large packet may include a concatenation of multiple network packets (e.g., MTU or other suitable types of network packets), in which case the large packet may include a large packet header including multiple network packet payloads of the multiple network packets and a large packet header including a set of header fields common to the multiple network packets that are included in the large packet (e.g., common data link layer, IP, and transport layer protocol headers).

The data structure, as noted above, includes packet metadata associated with the large packet. The packet metadata of the data structure may include one or more packet metadata fields. The packet metadata of the data structure has a first packet metadata format provided by the element from which the data structure is received (e.g., from a NIC or other suitable element which may set the format of the packet metadata of the data structure transporting the large packet).

At block 720, the virtual switch processes the data structure to provide a modified data structure including the concatenated packet and associated new packet metadata. The new packet metadata has a second packet metadata format which is different than the first packet metadata format. The second packet metadata format is the packet metadata format expected by the virtual switch. The difference between the first packet metadata format and the second packet metadata format may be in terms of the one or more of the fields included, one or more values included in one or more of the fields, or the like, as well as various combinations thereof. The virtual switch may process the data structure to provide the modified data structure including by modifying the packet metadata of the received data structure to conform to the second packet metadata format expected by the virtual switch (e.g., modifying one or more values of one or more fields of the packet metadata of the received data structure) to provide thereby the modified data structure including the new packet metadata that conforms to the second packet metadata format expected by the virtual switch.

At block 730, the virtual switch forwards the modified data structure transporting the large packet. The virtual switch may forward the modified data structure transporting the large packet toward a network interface card (e.g., pNIC or vNIC) that may be configured to handle the data structure transporting the large packet (e.g., forwarding the modified data structure transporting the large packet, recovering multiple network packets from the large packet, or the like).

At block 799, method 700 ends.

It will be appreciated that, as discussed hereinabove, configuration of a virtual switch to support NIC offloading may enable various features to be supported and may provide various advantages.

For example, the configuration of a virtual switch to support NIC offloading may enable line rate processing of large packets by data plane services by configuring the virtual switch to switch large packets using NIC offloading.

For example, in cases in which a data plane service cannot run in situ with the application for which the data plane service is provided and, thus, the data plane service and the application are running on two different servers, the configuration of a virtual switch to support NIC offloading may enable use of the tunneling offload feature of the NICs to support tunneling of large packets between the two different servers. This enables large packets to be used in cases when a data plane service cannot run in situ with the application for which the data plane service is provided. This maintains a uniform large packet interface for any tenant application and data plane service regardless of where they are deployed, thereby allowing the data plane service to benefit from large packets whether or not it is co-located with the tenant application.

It will be appreciated that configuration of a virtual switch to support NIC offloading may enable various other features to be supported and may provide various other advantages. It will be appreciated that, although NIC offloading is primarily presented herein within the context of supporting the data plane services support mechanism, NIC offloading may be provided in, and may provide associated benefits for, various other contexts other than supporting the data plane services support mechanism. In other words, it will be appreciated that various embodiments of NIC offloading presented herein may be used independent of the data plane services support mechanism.

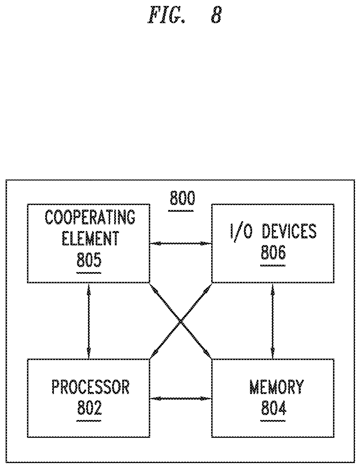

FIG. 8 depicts a high-level block diagram of a computer suitable for use in performing various functions described herein.

The computer 800 includes a processor 802 (e.g., a central processing unit (CPU), a processor having a set of processor cores, a processor core of a processor, or the like) and a memory 804 (e.g., a random access memory (RAM), a read only memory (ROM), or the like). The processor 802 and the memory 804 are communicatively connected.

The computer 800 also may include a cooperating element 805. The cooperating element 805 may be a hardware device. The cooperating element 805 may be a process that can be loaded into the memory 804 and executed by the processor 802 to implement functions as discussed herein (in which case, for example, the cooperating element 805 (including associated data structures) can be stored on a non-transitory computer-readable storage medium, such as a storage device or other storage element (e.g., a magnetic drive, an optical drive, or the like)).

The computer 800 also may include one or more input/output devices 806. The input/output devices 806 may include one or more of a user input device (e.g., a keyboard, a keypad, a mouse, a microphone, a camera, or the like), a user output device (e.g., a display, a speaker, or the like), one or more network communication devices or elements (e.g., an input port, an output port, a receiver, a transmitter, a transceiver, or the like), one or more storage devices (e.g., a tape drive, a floppy drive, a hard disk drive, a compact disk drive, or the like), or the like, as well as various combinations thereof.

It will be appreciated that computer 800 of FIG. 8 may represent a general architecture and functionality suitable for implementing functional elements described herein, portions of functional elements described herein, or the like, as well as various combinations thereof. For example, computer 400 may provide a general architecture and functionality that is suitable for implementing one or more of hardware components of hardware 111 of server 110, cloud orchestration system 120, data plane services system 130, service management interface system 140, or the like.

It will be appreciated that the functions depicted and described herein may be implemented in software (e.g., via implementation of software on one or more processors, for executing on a general purpose computer (e.g., via execution by one or more processors) so as to provide a special purpose computer, and the like) and/or may be implemented in hardware (e.g., using a general purpose computer, one or more application specific integrated circuits (ASIC), and/or any other hardware equivalents).

It will be appreciated that at least some of the functions discussed herein as software methods may be implemented within hardware, for example, as circuitry that cooperates with the processor to perform various functions. Portions of the functions/elements described herein may be implemented as a computer program product wherein computer instructions, when processed by a computer, adapt the operation of the computer such that the methods and/or techniques described herein are invoked or otherwise provided. Instructions for invoking the various methods may be stored in fixed or removable media (e.g., non-transitory computer-readable media), transmitted via a data stream in a broadcast or other signal bearing medium, and/or stored within a memory within a computing device operating according to the instructions.

It will be appreciated that the term "or" as used herein refers to a non-exclusive "or" unless otherwise indicated (e.g., use of "or else" or "or in the alternative").

Aspects of various embodiments are specified in the claims.

It will be appreciated that, although various embodiments which incorporate the teachings presented herein have been shown and described in detail herein, those skilled in the art can readily devise many other varied embodiments that still incorporate these teachings.

## Claims

1. A non-transitory computer-readable storage medium storing instruction which, when executed by a computer, cause the computer to perform a method, the method comprising:
initiating instantiation of a first virtual resource on a server (110), wherein the first virtual resource is associated with a second virtual resource configured to run an application (116-XA, 116-YA, 116-ZA);
initiating configuration of the first virtual resource to provide a data plane service (117-XS) for the application (116-XA);
initiating configuration of flow connectivity for the data plane service (117-XS); and
initiating, based on monitoring of a load on the application, a scaling of the data plane service;
wherein the data plane service includes packet processing service which is provided in the data plane.

2. The non-transitory computer-readable storage medium of claim 1, wherein initiating instantiation of the first virtual resource on the server (110) comprises:
sending, toward a virtual resource manager (113) of the server (110), a request for instantiation of the first virtual resource on the server (110).

3. The non-transitory computer-readable storage medium of claim 1, wherein initiating configuration of the first virtual resource to provide the data plane service (117-XS) for the application (116-XA) comprises:
sending, toward a virtual switch (114) configured to support the first virtual resource, a request to configure the first virtual resource to provide the data plane service (117-XS) for the application (116-XA).

4. The non-transitory computer-readable storage medium of claim 1, wherein initiating configuration of the first virtual resource to provide the data plane service (117-XS) for the application (116-XA) comprises:
sending, toward the first virtual resource, data plane service configuration information for use by the first virtual resource to provide the data plane service (117-XS) for the application (116-XA).

5. The non-transitory computer-readable storage medium of claim 1, wherein initiating configuration of flow connectivity for the data plane service (117-XS) comprises:
sending, toward a virtual switch (114) configured to support the first virtual resource, flow connectivity information for use by the virtual switch (114) to support forwarding of application traffic associated with the application (116-XA).

6. The non-transitory computer-readable storage medium of claim 5, wherein the flow connectivity information comprises information indicative that packets intended for the application (116-XA) are to be forwarded to the first virtual resource and to the second virtual resource in parallel.

7. The non-transitory computer-readable storage medium of claim 5, wherein the flow connectivity information comprises information indicative that packets intended for the application (116-XA) are to be forwarded to the first virtual resource.

8. The non-transitory computer-readable storage medium of claim 5, wherein the flow connectivity information comprises information indicative that packets sourced by the application (116-XA) are to be forwarded to the first virtual resource.

9. An apparatus, comprising:
a processor and a memory communicatively connected to the processor, the processor configured to:
initiate instantiation of a first virtual resource associated with a second virtual resource, wherein the second virtual resource is configured to run an application (116-XA, 116-YA, 116-ZA);
initiate configuration of the first virtual resource to provide a data plane service (117-XS) for the application (116-XA);
initiate configuration of flow connectivity for the data plane service (117-XS); and
initiate, based on monitoring of a load on the application, a scaling of the data plane service;
wherein the data plane service includes packet processing service which is provided in the data plane.

10. A method, comprising:
initiating, by a processor, instantiation of a first virtual resource associated with a second virtual resource, wherein the second virtual resource is configured to run an application (116-XA, 116-YA, 116-ZA);
initiating, by the processor, configuration of the first virtual resource to provide a data plane service (117-XS) for the application (116-XA);
initiating, by the processor configuration of flow connectivity for the data plane service (117-XS); and
initiating, based on monitoring of a load on the application, a scaling of the data plane service (117-XS);
wherein the data plane service includes packet processing service which is provided in the data plane.

## Patentansprüche

1. Nichttransitorisches computerlesbares Speichermedium, auf dem Anweisungen gespeichert ist, die, wenn sie von einem Computer ausgeführt wird, den Computer veranlasst, ein Verfahren durchzuführen, wobei das Verfahren Folgendes umfasst:
Initiieren einer Instanziierung einer ersten virtuellen Ressource auf einem Server (110), wobei die erste virtuelle Ressource mit einer zweiten virtuellen Ressource verknüpft ist, die dazu ausgelegt ist, eine Anwendung (116-XA, 116-YA, 116-ZA) auszuführen;
Initiieren einer Auslegung der ersten virtuellen Ressource, um einen Datenebenendienst (117-XS) für die Anwendung (116-XA) bereitzustellen;
Initiieren einer Auslegung einer Flusskonnektivität für den Datenebenendienst (117-XS); und
Initiieren einer Skalierung des Datenebenendienstes auf Basis des Überwachens einer Auslastung der Anwendung;
wobei der Datenebenendienst einen Paketverarbeitungsdienst beinhaltet, der auf der Datenebene bereitgestellt ist.

2. Nichttransitorisches computerlesbares Speichermedium nach Anspruch 1, wobei das Initiieren einer Instanziierung der ersten virtuellen Ressource auf dem Server (110) Folgendes umfasst:
Senden einer Anforderung einer Instanziierung der ersten virtuellen Ressource auf dem Server (110) an einen virtuellen Ressourcenverwalter (113) des Servers (110).

3. Nichttransitorisches computerlesbares Speichermedium nach Anspruch 1, wobei das Initiieren einer Auslegung der ersten virtuellen Ressource, um den Datenebenendienst (117-XS) für die Anwendung (116-XA) bereitzustellen, Folgendes umfasst:
Senden einer Anforderung zum Auslegen der ersten virtuellen Ressource an einen virtuellen Switch (114), der dazu ausgelegt ist, die erste virtuelle Ressource zu unterstützen, um den Datenebenendienst (117-XS) für die Anwendung (116-XA) bereitzustellen.

4. Nichttransitorisches computerlesbares Speichermedium nach Anspruch 1, wobei das Initiieren einer Auslegung der ersten virtuellen Ressource, um den Datenebenendienst (117-XS) für die Anwendung (116-XA) bereitzustellen, Folgendes umfasst:
Senden von Auslegungsinformationen für einen Datenebenendienst zur Verwendung durch die erste virtuelle Ressource an die erste virtuelle Ressource, um den Datenebenendienst (117-XS) für die Anwendung (116-XA) bereitzustellen.

5. Nichttransitorisches computerlesbares Speichermedium nach Anspruch 1, wobei das Initiieren einer Auslegung einer Flusskonnektivität für den Datenebenendienst (117-XS) Folgendes umfasst:
Senden von Flusskonnektivitätsinformationen zur Verwendung durch einen virtuellen Switch (114) an den virtuellen Switch (114), der dazu ausgelegt ist, die erste virtuelle Ressource zu unterstützen, um ein Weiterleiten von Anwendungsverkehr zu unterstützen, der mit der Anwendung (116-XA) verknüpft ist.

6. Nichttransitorisches computerlesbares Speichermedium nach Anspruch 5, wobei die Flusskonnektivitätsinformationen Informationen umfassen, die anzeigen, dass Pakete, die für die Anwendung (116-XA) vorgesehen sind, an die erste virtuelle Ressource und die zweite virtuelle Ressource parallel weiterzuleiten sind.

7. Nichttransitorisches computerlesbares Speichermedium nach Anspruch 5, wobei die Flusskonnektivitätsinformationen Informationen umfassen, die anzeigen, dass Pakete, die für die Anwendung (116-XA) vorgesehen sind, zur ersten virtuellen Ressource weiterzuleiten sind.

8. Nichttransitorisches computerlesbares Speichermedium nach Anspruch 5, wobei die Flusskonnektivitätsinformationen Informationen umfassen, die anzeigen, dass Pakete, die durch die Anwendung (116-XA) bezogen werden, zur ersten virtuellen Ressource weiterzuleiten sind.

9. Vorrichtung, die Folgendes umfasst:
einen Prozessor und einen Speicher, der kommunikativ mit dem Prozessor verbunden ist, wobei der Prozessor zu Folgendem ausgelegt ist:
Initiieren einer Instanziierung einer ersten virtuellen Ressource, die mit einer zweiten virtuellen Ressource verknüpft ist, wobei die zweite virtuelle Ressource dazu ausgelegt ist, eine Anwendung (116-XA, 116-YA, 116-ZA) auszuführen;
Initiieren einer Auslegung der ersten virtuellen Ressource, um einen Datenebenendienst (117-XS) für die Anwendung (116-XA) bereitzustellen;
Initiieren einer Auslegung einer Flusskonnektivität für den Datenebenendienst (117-XS); und
Initiieren einer Skalierung des Datenebenendienstes auf Basis des Überwachens einer Auslastung der Anwendung;
wobei der Datenebenendienst einen Paketverarbeitungsdienst beinhaltet, der auf der Datenebene bereitgestellt ist.

10. Verfahren, das Folgendes umfasst:
Initiieren einer Instanziierung einer ersten virtuellen Ressource, die mit einer zweiten virtuellen Ressource verknüpft ist, durch einen Prozessor, wobei die zweite virtuelle Ressource dazu ausgelegt ist, eine Anwendung (116-XA, 116-YA, 116-ZA) auszuführen;
Initiieren einer Auslegung der ersten virtuellen Ressource durch den Prozessor, um einen Datenebenendienst (117-XS) für die Anwendung (116-XA) bereitzustellen;
Initiieren einer Auslegung einer Flusskonnektivität für den Datenebenendienst (117-XS) durch den Prozessor; und
Initiieren einer Skalierung des Datenebenendienstes (117-XS) auf Basis des Überwachens einer Auslastung der Anwendung;
wobei der Datenebenendienst einen Paketverarbeitungsdienst beinhaltet, der auf der Datenebene bereitgestellt ist.

## Revendications

1. Support de stockage non transitoire lisible par ordinateur stockant des instructions qui, lorsqu'elles sont exécutées par un ordinateur, amènent l'ordinateur à réaliser un procédé, le procédé comprenant :
l'initiation d'une instanciation d'une première ressource virtuelle sur un serveur (110), dans lequel la première ressource virtuelle est associée à une deuxième ressource virtuelle configurée pour exécuter une application (116-XA, 116-YA, 116-ZA) ;
l'initiation d'une configuration de la première ressource virtuelle pour fournir un service de plan de données (117-XS) à l'application (116-XA) ;
l'initiation d'une configuration de connectivité de flux pour le service de plan de données (117-XS) ; et
sur la base d'une surveillance d'une charge sur l'application, l'initiation d'une mise à l'échelle du service de plan de données ;
dans lequel le service de plan de données comporte un service de traitement des paquets qui est prévu dans le plan de données.

2. Support de stockage non transitoire lisible par ordinateur selon la revendication 1, dans lequel l'initiation d'une instanciation de la première ressource virtuelle sur le serveur (110) comprend :
l'envoi d'une demande d'instanciation de la première ressource virtuelle sur le serveur (110) à un gestionnaire de ressources virtuelles (113) du serveur (110).

3. Support de stockage non transitoire lisible par ordinateur selon la revendication 1, dans lequel l'initiation d'une configuration de la première ressource virtuelle pour fournir le service de plan de données (117-XS) à l'application (116-XA) comprend :
l'envoi d'une demande de configuration de la première ressource virtuelle pour fournir le service de plan de données (117-XS) à l'application (116-XA) à un commutateur virtuel (114) configuré pour prendre en charge la première ressource virtuelle.

4. Support de stockage non transitoire lisible par ordinateur selon la revendication 1, dans lequel l'initiation d'une configuration de la première ressource virtuelle pour fournir le service de plan de données (117-XS) à l'application (116-XA) comprend :
l'envoi d'informations de configuration de service de plan de données à la première ressource virtuelle pour qu'elles soient utilisées par la première ressource virtuelle pour fournir le service de plan de données (117-XS) à l'application (116-XA).

5. Support de stockage non transitoire lisible par ordinateur selon la revendication 1, dans lequel l'initiation d'une configuration de connectivité de flux pour le service de plan de données (117-XS) comprend :
l'envoi d'informations de connectivité de flux à un commutateur virtuel (114) configuré pour prendre en charge la première ressource virtuelle, pour qu'elles soient utilisées par le commutateur virtuel (114) pour prendre en charge le transfert du trafic d'application associé à l'application (116-XA).

6. Support de stockage non transitoire lisible par ordinateur selon la revendication 5, dans lequel les informations de connectivité de flux comprennent des informations indiquant que les paquets destinés à l'application (116-XA) doivent être transférés en parallèle à la première ressource virtuelle et à la deuxième ressource virtuelle.

7. Support de stockage non transitoire lisible par ordinateur selon la revendication 5, dans lequel les informations de connectivité de flux comprennent des informations indiquant que les paquets destinés à l'application (116-XA) doivent être transférés à la première ressource virtuelle.

8. Support de stockage non transitoire lisible par ordinateur selon la revendication 5, dans lequel les informations de connectivité de flux comprennent des informations indiquant que les paquets provenant de l'application (116-XA) doivent être transférés à la première ressource virtuelle.

9. Appareil, comprenant :
un processeur et une mémoire connectée de manière communicative au processeur, le processeur étant configuré pour :
initier une instanciation d'une première ressource virtuelle associée à une deuxième ressource virtuelle, dans lequel la deuxième ressource virtuelle est configurée pour exécuter une application (116-XA, 116-YA, 116-ZA) ;
initier une configuration de la première ressource virtuelle pour fournir un service de plan de données (117-XS) à l'application (116-XA) ;
initier une configuration de connectivité de flux pour le service de plan de données (117-XS) ; et
sur la base d'une surveillance d'une charge sur l'application, initier une mise à l'échelle du service de plan de données ;
dans lequel le service de plan de données comporte un service de traitement des paquets qui est prévu dans le plan de données.

10. Procédé, comprenant :
par un processeur, l'initiation d'une instanciation d'une première ressource virtuelle associée à une deuxième ressource virtuelle, dans lequel la deuxième ressource virtuelle est configurée pour exécuter une application (116-XA, 116-YA, 116-ZA) ;
par le processeur, l'initiation d'une configuration de la première ressource virtuelle pour fournir un service de plan de données (117-XS) à l'application (116-XA) ;
par le processeur, l'initiation d'une configuration de connectivité de flux pour le service de plan de données (117-XS) ; et
sur la base d'une surveillance d'une charge sur l'application, l'initiation d'une mise à l'échelle du service de plan de données (117-XS) ;
dans lequel le service de plan de données comporte un service de traitement des paquets qui est prévu dans le plan de données.
